# FASCICULE DE BREVET EUROPEEN

(11) **EP 3 443 330 B1**
(45) Date de publication et mention de la délivrance du brevet: **08.04.2020**
(21) Numéro de dépôt: 17722095.1
(22) Date de dépôt: 11.04.2017
(51) Int. Cl.: G01N 21/90, G01N 21/93

(54) **MÉTHODE ET SYSTÈME DE VÉRIFICATION D'UNE INSTALLATION D'INSPECTION OPTIQUE DE RÉCIPIENTS EN VERRE**
VERFAHREN UND SYSTEM ZUR ÜBERPRÜFUNG EINER VORRICHTUNG ZUR OPTISCHEN INSPEKTION VON BEHÄLTERN AUS GLAS
METHOD AND SYSTEM FOR CHECKING AN APPARATUS FOR OPTICALLY INSPECTING CONTAINERS MADE OF GLASS

(30) Priorité: 15.04.2016 FR 1653360
(43) Date de publication de la demande: 20.02.2019
(73) Titulaire: Tiama, 69390 Vourles (FR)
(72) Inventeur: LOPEZ, Bernard, 69300 Caluire et Cuire (FR)
(74) Mandataire: Cabinet Beau de Loménie
(86) Numéro de dépôt international: PCT/FR2017/050873
(87) Numéro de publication internationale: WO 2017/178754

(56) Documents cités:
- EP-A1- 2 581 732
- DE-A1- 19 646 694
- DE-A1-102010 043 632
- DE-A1-102015 203 060
- DE-U1- 29 910 452
- JP-A- H0 989 805
- JP-A- 2005 195 496

## Description

L'invention concerne une méthode et un système de vérification d'une installation d'inspection optique de récipients en verre.

Lors de la fabrication de récipients en verre, notamment des bouteilles ou des pots, il existe la possibilité qu'un ou plusieurs récipients présente(nt) une caractéristique physique, notamment une caractéristique géométrique, non conforme. Cette caractéristique non conforme peut notamment comporter un ou des défauts de surface, tels que des plis ou des crevasses, ou un ou des défauts internes à la matière, tel que des fissures, inclusions, ou bulles, ou encore un ou des défauts dimensionnels du récipient, portant par exemple sur un diamètre, une hauteur, une épaisseur de verre, une planéité de surface de buvant, etc.

Pour détecter la présence de tels défauts, il est connu de prévoir, dans les lignes de fabrication de récipients en verre, des installations d'inspection optique des récipients qui sont capables de déterminer, par un procédé optique, un résultat d'inspection lié à une ou plusieurs caractéristiques d'un récipient, et même d'en déterminer un caractère normal ou anormal. Dans une ligne de fabrication, ces installations d'inspection optique peuvent être associées à des mécanismes d'éjection des récipients non conformes.

Toutefois, de telles installations d'inspection optique doivent être réglées et calibrées et doivent, en cours de fonctionnement, être vérifiées, afin de s'assurer que, au fil du temps et de la production de récipients en verre, l'inspection réalisée est toujours fiable.

Une méthode connue de vérification d'une installation d'inspection optique est de soumettre, manuellement, à cette installation, un récipient témoin, afin que celui-ci soit inspecté par l'installation. Le récipient témoin comporte généralement au moins un défaut connu susceptible d'être détecté par l'installation d'inspection. On vérifie alors que l'installation d'inspection a un fonctionnement nominal en vérifiant que celle-ci détecte bien, par son procédé d'inspection optique, que le récipient présente un défaut.

Généralement, les installations d'inspection optique sont installées sur une ligne de convoyage des récipients de manière à inspecter automatiquement la totalité ou en tous cas une partie significative des récipients convoyés sur la ligne. Les installations d'inspection optique sont donc installées sur une trajectoire de convoyage des récipients. Afin de pouvoir vérifier le fonctionnement nominal de l'installation d'inspection optique, il est donc souhaitable de pouvoir procéder à la vérification sans interrompre la ligne de convoyage, simplement en insérant un récipient témoin dans la ligne de convoyage, en amont de l'installation d'inspection à vérifier. Dans un tel cas, il est donc nécessaire de pouvoir reconnaître le récipient témoin ainsi inséré afin de pouvoir vérifier que ce récipient témoin est bien détecté par l'installation d'inspection comme présentant un défaut.

Pour cela, il est connu de prévoir sur le récipient témoin une marque témoin permettant de le reconnaître. Cette marque témoin est généralement rapportée sur le récipient témoin après la fabrication de celui-ci, une fois qu'aura été déterminé, pour ce récipient témoin, un résultat d'inspection attendu, par exemple lié à une caractéristique physique particulière, notamment une caractéristique constitutive d'un défaut.

Cette marque témoin est généralement destinée à être détectée visuellement par un opérateur, ce qui permet à l'opérateur de reconnaitre et récupérer le récipient témoin à la sortie de la machine. L'opérateur vérifie la détection effectuée par la machine. Il est prévu habituellement un mode spécifique de fonctionnement des installations d'inspection optique lors des passages de récipients témoins : dans ce mode dit de vérification, les résultats de l'inspection sont présentés à l'opérateur de manière graphique par exemple, pour que l'opérateur compare les résultats d'inspection des récipients témoins aux résultats attendus. Les résultats d'inspections des récipients témoins ne sont pas intégrés aux statistiques de la production en cours. Il peut être également prévu, dans certaines installations d'inspection optique, que les récipients témoins sont éjectés automatiquement par l'installation, de manière spécifique, en prévoyant par exemple un bac de récupération des récipients témoins. La tâche de vérification, faisant ainsi intervenir les opérateurs, présente plusieurs inconvénients : nécessité d'interrompre le flux, ce qui perturbe l'exploitation, nécessité de passer la machine en mode de vérification, contrôle du verdict par l'opérateur sans possibilité de rapport numérique automatisé.

Cette marque témoin est généralement destinée à être détectée visuellement par un opérateur, ou en tout cas la marque témoin est visible optiquement. Dans ce cas, si la marque témoin est portée par le récipient témoin, sur une portion de marquage de celui-ci, la marque témoin doit être apposée sur une portion du récipient qui n'est pas inspectée par l'installation d'inspection optique. En effet, dans le cas contraire, la marque témoin serait détectée comme étant un défaut ou, si elle est apposée sur une portion du récipient comportant un défaut, ce défaut ne pourrait pas être détecté. Comme il peut exister plusieurs installations d'inspection optique sur une même ligne, destinées à contrôler complémentairement l'intégralité ou une grande partie de la surface des récipients, il n'est pas toujours possible de trouver, sur les récipients témoins, un emplacement idéal apte à recevoir la marque témoin.

On pourrait aussi envisager de munir le récipient d'autres types de moyens de reconnaissance, par exemple par apposition d'une marque reconnaissable par interrogation en radiofréquences, par exemple avec une puce RFID. Cependant, la reconnaissance d'une telle puce utilise des ondes électromagnétiques en dehors du domaine optique, nécessitant la maîtrise d'autres technologies. De plus, de telles puces RFID ont un coût non négligeable et elles gênent les inspections optiques, si bien qu'il n'est pas toujours possible de trouver sur les récipients témoins un emplacement idéal apte à recevoir la marque témoin dans le cas d'un contrôle intégral ou quasi intégral des récipients.

Le document WO-2005/119224 décrit un appareil comprenant une boucle de convoyeur pour les récipients d'essai. La boucle est connectée, à une extrémité, à la voie de contrôle en amont des dispositifs d'inspection, et à son autre extrémité, à la voie de transport en aval des dispositifs d'inspection. Un contrôleur automatise de préférence un cycle de test pour fournir des récipients d'essai dans le trajet d'inspection, recevoir de l'information quant aux caractéristiques détectées dans les récipients d'essai, et assurer le retour des récipients d'essai depuis la voie de contrôle vers la boucle de convoyeur pour les récipients d'essai. Le procédé de vérification nécessite d'arrêter le flux de convoyage des articles pour permettre le passage des récipients d'essai qui sont ensuite récupérés et stockés sur un convoyeur d'attente pour permettre ensuite la remise en circulation des récipients de la production. Cela perturbe et ralentit notablement la cadence d'inspection. De plus, la ligne de stockage nécessaire représente un encombrement problématique. On remarque qu'il n'y a aucun moyen de reconnaissance des échantillons. Ainsi, la vérification impose de faire passer l'installation, et donc la portion de la ligne de fabrication dans laquelle elle est insérée, dans un mode particulier de test, incompatible avec la poursuite de l'inspection des récipients en production. Par ailleurs le seul moyen d'associer les récipients d'essai aux défauts qu'ils portent est de les classer et de maintenir leur ordre de passage, ce qui présente un risque majeur d'erreur.

DE 196 46 694 A1 décrit une méthode de vérification d'un procédé d'inspection optique et un système de vérification d'une installation d'inspection optique de récipients en verre, utilisant des récipients témoins, qui peuvent être marqués pour les identifier.

L'invention a donc pour but de proposer une nouvelle méthode et un nouveau système de vérification d'une installation d'inspection optique basés sur des procédés optiques dans le domaine optique et permettant de reconnaître automatiquement le passage de récipients témoins dans l'installation d'inspection optique.

Dans ce but, l'invention propose une méthode de vérification d'un procédé d'inspection optique de récipients en verre, dans lequel le procédé d'inspection optique d'un récipient comporte les étapes consistant à :
- illuminer au moins une portion inspectée du récipient avec une lumière d'inspection incidente ayant un spectre d'inspection incident ;
- recueillir une lumière d'inspection retour résultant de l'interaction de la lumière d'inspection incidente avec la portion inspectée du récipient, la lumière d'inspection retour ayant un spectre d'inspection retour ;
- convertir, dans une bande spectrale d'inspection, la lumière d'inspection retour recueillie en une image numérique d'inspection multipoints linéaire ou bidimensionnelle ;
- analyser l'image numérique d'inspection pour déterminer un résultat d'inspection du récipient inspecté ;
dans laquelle la méthode de vérification comporte les étapes consistant à :
- inspecter, conformément au procédé d'inspection optique, un récipient témoin comportant une marque témoin apposée sur une portion de marquage du récipient témoin ;
- comparer un résultat d'inspection du récipient témoin déterminé par le procédé d'inspection optique à un résultat d'inspection connu du récipient témoin.

La méthode de vérification comporte un procédé de reconnaissance optique d'un récipient témoin par lecture optique d'une marque témoin dans une portion de marquage marquée du récipient témoin, comportant les étapes consistant à :
- illuminer au moins la portion de marquage du récipient avec une lumière de reconnaissance incidente ayant un spectre de reconnaissance incident ;
- recueillir une lumière de reconnaissance retour résultant de l'interaction de la lumière de reconnaissance incidente avec la portion de marquage et une marque témoin éventuelle, la lumière de reconnaissance retour ayant un spectre de reconnaissance retour ;
- convertir, dans une bande spectrale de reconnaissance, la lumière de reconnaissance retour recueillie en une image numérique de reconnaissance multipoints linéaire ou bidimensionnelle ;
- analyser informatiquement l'image numérique de reconnaissance pour y reconnaître la marque témoin éventuelle.

L'invention concerne aussi un système de vérification d'une installation d'inspection optique de récipients en verre, dans lequel l'installation d'inspection d'un récipient comporte :
- une source de lumière d'inspection incidente illuminant une zone d'inspection de l'installation et ayant un spectre d'inspection incident ;
- un collecteur optique recueillant une lumière d'inspection retour résultant de l'interaction de la lumière d'inspection incidente avec une portion inspectée d'un récipient placé dans la zone d'inspection, la lumière d'inspection retour ayant un spectre d'inspection retour ;
- un capteur photoélectrique d'inspection convertissant, dans une bande spectrale d'inspection, la lumière d'inspection retour recueillie en une image numérique d'inspection multipoints linéaire ou bidimensionnelle ;
- une unité informatique d'analyse de l'image numérique d'inspection configurée pour déterminer un résultat d'inspection du récipient inspecté.

Le système de vérification comporte :
- au moins un récipient témoin comportant une marque témoin apposée sur une portion de marquage du récipient témoin, le récipient étant adapté pour être positionné dans la zone d'inspection de l'installation d'inspection optique, et ;
- une unité de traitement informatique configurée pour comparer un résultat d'inspection d'un récipient témoin, tel que déterminé par l'installation d'inspection optique, à un résultat d'inspection attendu du récipient témoin.

Le système comporte une installation de reconnaissance optique d'un récipient témoin par reconnaissance optique d'une marque témoin dans une portion de marquage du récipient témoin, comportant :
- une source de lumière de reconnaissance incidente illuminant une zone de reconnaissance de l'installation et ayant un spectre de reconnaissance incident ;
- un collecteur optique recueillant, en présence d'un récipient témoin dans la zone de reconnaissance, une lumière de reconnaissance retour résultant de l'interaction de la lumière de reconnaissance incidente avec la portion de marquage et avec une marque témoin éventuelle, la lumière de reconnaissance retour ayant un spectre de reconnaissance retour ;
- un capteur photoélectrique de reconnaissance convertissant, dans une bande spectrale de reconnaissance, la lumière de reconnaissance retour recueillie en une image numérique de reconnaissance multipoints linéaire ou bidimensionnelle ;
- une unité informatique d'analyse de l'image numérique de reconnaissance pour détecter la marque témoin éventuelle.

Dans un mode de réalisation particulier, la méthode et/ou le procédé sont caractérisés en ce que la marque témoin comporte un matériau photoluminescent qui, sous l'effet d'une illumination dans une bande spectrale d'excitation, émet une lumière de luminescence qui présente un spectre de luminescence, et en ce que le spectre de reconnaissance incident comporte au moins une partie de la bande spectrale d'excitation tandis que le spectre d'inspection incident est disjoint de la bande spectrale d'excitation.

Dans un autre mode de réalisation particulier, qui peut être combiné au précédent, la méthode et/ou le procédé sont caractérisés en ce que la marque témoin comporte un matériau photoluminescent qui, sous l'effet d'une illumination dans une bande spectrale d'excitation, émet une lumière de luminescence qui présente un spectre de luminescence, et en ce que le spectre de luminescence est compris dans la bande spectrale de reconnaissance et disjoint de la bande spectrale d'inspection.

Dans ces exemples, la bande spectrale d'excitation du matériau luminescent peut présenter une longueur d'onde maximale inférieure à 400 nm tandis que le spectre d'inspection incident peut présenter une longueur d'onde minimale supérieure à 400 nm.

De manière plus générale, la marque témoin, apposée sur la portion de marquage d'un récipient témoin, possède des propriétés optiques de transformation spectrale telles que :
- la transformation de la distribution spectrale d'intensité entre la lumière de reconnaissance incidente et la lumière de reconnaissance retour, provoquée par interaction avec la portion de marquage marquée, est différente, à l'intérieur au moins de la bande spectrale de reconnaissance, d'une transformation de la distribution spectrale d'intensité entre la lumière de reconnaissance incidente et la lumière de reconnaissance retour, provoquée par interaction avec une portion de marquage libre de marque ;
- la transformation de la distribution spectrale d'intensité entre la lumière d'inspection incidente et la lumière d'inspection retour, provoquée par interaction avec la portion de marquage marquée, n'est pas différente, à l'intérieur au moins d'une portion utile de la bande spectrale d'inspection, de la transformation de la distribution spectrale d'intensité entre la lumière d'inspection incidente et la lumière d'inspection retour par interaction avec une portion de marquage libre de marque.

De manière générale, la marque témoin, apposée sur la portion de marquage d'un récipient témoin, possède des propriétés optiques de transformation spectrale qui confèrent à la portion de marquage marquée des propriétés optiques de transformation spectrale qui diffèrent de celles de la portion de marquage libre de marque dans une portion utile du spectre de reconnaissance incident et/ou de la bande spectrale de reconnaissance et qui sont identiques à celles de la portion de marquage libre de marque dans au moins l'ensemble d'une portion utile du spectre d'inspection incident et de la bande spectrale d'inspection.

Selon des caractéristiques optionnelles, prises seules ou en combinaison :
- Les propriétés optiques de transformation spectrale de la portion de marquage marquée peuvent différer de celles de la portion de marquage libre dans une partie du spectre de reconnaissance incident qui n'est pas comprise dans le spectre d'inspection incident ;
- Les propriétés optiques de transformation spectrale de la portion de marquage marquée peuvent différer de celles de la portion de marquage libre de telle sorte que, lorsqu'elles sont illuminées par la lumière de reconnaissance incidente, les lumières de reconnaissance retour correspondantes pour la portion de marquage marquée et pour la portion de marquage libre sont différentes dans la bande spectrale de reconnaissance ;
- Les propriétés optiques de transformation spectrale de la marque témoin peuvent être telles que, lorsqu'elles sont illuminées par la lumière d'inspection incidente, la lumière d'inspection retour pour la portion de marquage marquée et la lumière d'inspection retour pour la portion de marquage libre sont identiques dans la portion utile de bande spectrale d'inspection ;
- L'interaction de la lumière d'inspection avec la portion de marquage marquée et avec la portion de marquage libre peuvent provoquer la même transformation, neutre ou modificative, entre la distribution spectrale d'intensité de la lumière d'inspection incidente et la distribution spectrale d'intensité de la lumière d'inspection retour dans la bande spectrale d'inspection ;
- La bande spectrale d'inspection et la bande spectrale de reconnaissance peuvent être disjointes, et le spectre d'inspection retour et le spectre de reconnaissance retour peuvent être disjoints ;
- Le spectre d'inspection incident et le spectre de reconnaissance incident peuvent être disjoints ;
- La marque témoin peut absorber une bande spectrale témoin qui est comprise dans la bande spectrale de reconnaissance et qui n'est pas comprise dans la bande spectrale d'inspection ;
- La marque témoin peut absorber une bande spectrale témoin qui est comprise dans la lumière de reconnaissance incidente et qui n'est pas comprise dans la lumière d'inspection incidente ;
- Le procédé de reconnaissance peut identifier le récipient témoin comme appartenant à une catégorie déterminée de récipients témoins parmi plusieurs catégories distinctes de récipient témoins ;
- Le procédé de reconnaissance peut identifier le récipient témoin de manière unique. Pour cela la marque témoin peut comporter un identifiant permettant d'identifier le récipient témoin de manière unique ;
- Le procédé de reconnaissance peut identifier le récipient témoin comme appartenant à une catégorie déterminée de récipients témoins, associée à un même résultat d'inspection attendu. Pour cela la marque témoin peut comporter un identifiant permettant d'identifier le récipient témoin comme appartenant à une catégorie déterminée de récipients témoins, associée à un même résultat d'inspection attendu ;
- La portion de marquage d'un récipient témoin peut recouper au moins en partie la portion inspectée du récipient témoin qui est inspectée dans le procédé d'inspection ;
- La méthode peut comporter l'étape d'insérer au moins un récipient témoin ayant un résultat d'inspection attendu dans une série de récipients à inspecter et à vérifier que le procédé d'inspection détermine le résultat d'inspection attendu pour ledit récipient témoin ;
- Dans le système, la zone de reconnaissance et la zone d'inspection peuvent être disjointes ou au moins en partie confondues ;
- Les sources de lumière de reconnaissance et d'inspection peuvent être allumées alternativement ;
- Le capteur photoélectrique d'inspection et le capteur photoélectrique de reconnaissance peuvent être des capteurs distincts ;
- La marque témoin peut être apposée sur une portion de marquage du récipient témoin qui est comprise dans la portion inspectée du récipient qui est inspectée par l'installation d'inspection ;
- L'identifiant de la marque témoin peut être constitué au moins en partie par un motif de la marque témoin ;
- L'unité de traitement informatique peut comporter un moyen de mémorisation des relations de correspondance entre des identifiants de marques témoin et des résultats d'inspection attendus pour des récipients témoins portant lesdits identifiants.

Diverses autres caractéristiques ressortent de la description faite ci-dessous en référence aux dessins annexés qui montrent, à titre d'exemples non limitatifs, des formes de réalisation de l'objet de l'invention.
La **Figure** 1 illustre de manière schématique une ligne de transport de récipients comprenant une installation d'inspection optique et un système de vérification conformes à l'invention.
Les **Figures 2A** et **2B** illustrent respectivement un récipient standard et une vue en coupe de sa portion de marquage.
Les **Figures 2C** et **2D** illustrent respectivement un récipient témoin sur lequel est apposée une marque témoin, et une vue en coupe de sa portion de marquage.
Les **Figures 3A** et **3B** illustrent respectivement un procédé de reconnaissance et un procédé d'inspection pour un mode de réalisation de l'invention.
Les **Figures 4A** et **4B** illustrent respectivement un procédé de reconnaissance et un procédé d'inspection pour un second mode de réalisation de l'invention.

L'invention concerne le domaine des installations d'inspection optique et des procédés d'inspection optique de récipients en verre, notamment de bouteilles ou de pots.

Le verre est un matériau amorphe à base d'oxyde de silicium (par exemple à base de silice SiO2) comportant éventuellement des fondants ainsi que par exemple des oxydes métalliques tels que trioxydes de bore, oxydes alcalins (tels que oxydes de calcium ou de magnésium oxydes de sodium, ...). Le verre le plus courant pour les récipients (« verre à bouteille ») est un verre sodocalcique. Une grande variété de teintes est proposée. Sauf pour des teintes exceptionnellement très sombres, le verre à bouteille est généralement transparent à la lumière visible, tout du moins dans une partie du domaine visible, ce qui permet au consommateur de voir le produit contenu. Cette transparence peut être utilisée par des procédés et installations optiques d'inspection des récipients fonctionnant en transparence, par transmission d'une lumière au travers du matériau du récipient. En effet les méthodes d'inspection automatique des récipients en verre sont très fréquemment des procédés optiques, et utilisent notamment les technologies de la vision industrielle.

Ces installations d'inspection optique et les procédés d'inspection optique sont aptes à déterminer un résultat d'inspection pour un récipient donné. Ce résultat d'inspection peut être lié à, ou être constitué par, la détection ou la détermination d'au moins une caractéristique physique d'un récipient, notamment une caractéristique géométrique, par exemple en vue de déterminer si un récipient est conforme ou non conforme par rapport à un standard admissible. Cette caractéristique peut notamment comprendre la présence et/ou la taille ou la géométrie d'un défaut de surface, tel que des plis ou des crevasses, et/ou d'un défaut interne à la matière, tel que des fissures, inclusions, ou bulles. Cette caractéristique peut comprendre le nombre, la densité, la localisation ou la répartition de tels défauts. Cette caractéristique peut encore comprendre une ou plusieurs dimensions des récipients, portant par exemple sur un diamètre, une hauteur, une épaisseur de verre, une planéité de surface, une circularité etc. Elle peut encore comprendre une combinaison des différents éléments cités ou évoqués ci-dessus.

Plus particulièrement, ces installations d'inspection optique et les procédés d'inspection optique sont aptes à un fonctionnement en ligne, c'est-à-dire aptes à fonctionner dans une ligne dans laquelle circule un flux de récipients qui se suivent en étant déplacés par un système de convoyage ou de manutention, notamment une ligne de fabrication, de transport, de remplissage, de traitement et/ou de conditionnement de récipients en verre, etc. Les récipients du flux peuvent être déplacés de poste en poste pour être inspectés dans au moins une installation d'inspection, voire dans différentes installations d'inspection successives. Dans une installation d'inspection, selon la méthode d'inspection, les récipients peuvent être immobilisés, rester en translation continue ou subir des rotations autour d'un axe. Les procédés et les installations sont aptes à inspecter automatiquement tous les récipients du flux ou au moins une partie des récipients du flux sur cette ligne, cette partie des récipients du flux comportant de préférence au moins un récipient choisi à intervalles réguliers dans le flux.

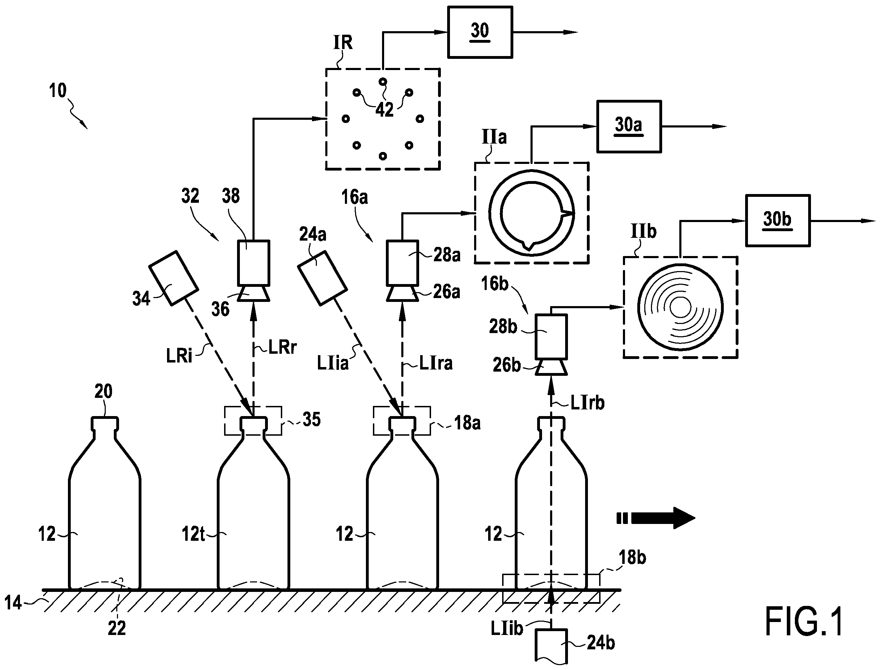

Sur la **Fig. 1****,** on a illustré à titre d'exemple une ligne de transport **10** de bouteilles **12** comportant un convoyeur **14** qui déplace les bouteilles selon une trajectoire de convoyage.

La ligne **10** comporte une ou plusieurs installations d'inspection, par exemple deux installations d'inspection **16a, 16b** dans l'exemple de la **Fig.1****.**

Par ailleurs, il est prévu un procédé de reconnaissance optique d'un récipient témoin **12t** par lecture optique d'une marque témoin portée par le récipient témoin, ce procédé étant mis en œuvre par une installation de reconnaissance optique **32.**

Ces installations **16a, 16b, 32** et les procédés d'inspection et de reconnaissance optiques qu'elles mettent en oeuvre, fonctionnent exclusivement dans le domaine optique recouvrant les ondes électromagnétiques dans les domaines de l'ultraviolet, du visible et de l'infrarouge, avec une longueur d'onde comprise entre 10 nm et 5 mm, de préférence comprises entre 100 nm et 20 microns. De préférence, chaque procédé et installation optique fonctionne dans une partie seulement du domaine optique. Bien entendu, la ligne peut comporter, en plus, des installations d'inspection fonctionnant selon un mode différent, non optique, par exemple selon un mode mécanique.

Un procédé d'inspection optique d'un récipient peut comporter différentes étapes, certaines pouvant être simultanées.

Dans un procédé d'inspection optique, on peut illuminer au moins une portion inspectée du récipient avec une lumière d'inspection incidente **LIiₐ, LIi_{b}** ayant un spectre d'inspection incident. La portion inspectée du récipient consiste en la portion du récipient que le procédé pourra inspecter et pour laquelle le procédé pourra déterminer un résultat d'inspection, par exemple par la capacité de détecter une caractéristique physique recherchée de ce récipient. Cette portion inspectée peut, dans le cas d'une bouteille, comprendre tout ou partie de la bague, de la surface annulaire du buvant, du col, de l'épaule, du fût, du jable, du fond, etc. ou une combinaison de ces parties de la bouteille. Dans l'exemple de la **Fig. 1****,** une première installation d'inspection **16a** est destinée à inspecter la surface annulaire de buvant **20** de la bouteille, tandis que la deuxième installation d'inspection **16b** est destinée à inspecter au moins une partie du fond **22** de la bouteille.

L'illumination de la portion inspectée peut être effectuée en utilisant une source **24a, 24b** de lumière d'inspection incidente **LIiₐ, LIi_{b}** illuminant une zone d'inspection de l'installation **18a, 18b.**

La zone d'inspection de l'installation correspond à la portion d'espace dans l'installation dans laquelle il est nécessaire de positionner la portion inspectée d'un récipient pour que celle-ci soit effectivement inspectée par l'installation. Dans l'exemple de la **Fig.1****,** les différentes installations d'inspection ont des zones d'inspections **18a, 18b** disjointes, i.e. qui ne se recoupent pas, d'une part car les deux installations d'inspection sont prévues pour inspecter des portions différentes du récipient (en l'occurrence respectivement la surface de bague **20** et le fond **22** d'un récipient de type bouteille), et d'autre part parce que les installations d'inspection sont décalées sur la ligne de telle sorte que les zones d'inspection **18a, 18b** correspondent à des positions différentes du récipient le long de la trajectoire de convoyage, i.e. à des postes différents. On pourrait toutefois prévoir que deux installations d'inspection inspectent la même portion inspectée des récipients, et/ou que deux installations d'inspection soient agencées à la même position sur la ligne, de telle sorte que les zones d'inspection, disjointes ou pas, peuvent correspondre à une même position du récipient le long de la trajectoire de convoyage, i.e. à un même poste.

La source **24a, 24b** de lumière d'inspection incidente **LIiₐ, LIi_{b}** peut être toute source émettant un rayonnement dans le domaine optique. Elle peut comprendre la lumière ambiante autour de l'installation et/ou une source dédiée. Une source dédiée peut comporter plusieurs sources élémentaires, identiques ou non. Elle peut comprendre un ou plusieurs source(s) de lumière uniforme, de lumière diffuse, de lumière directionnelle, étendue et/ou ponctuelle, etc.

Le procédé d'inspection optique peut recueillir une lumière d'inspection retour **LIrₐ**, **LIr_{b}** résultant de l'interaction de la lumière d'inspection incidente **LIiₐ, LIi_{b}** avec la portion inspectée du récipient, la lumière d'inspection retour ayant un spectre d'inspection retour.

L'interaction de la lumière d'inspection incidente **LIiₐ, LIi_{b}** avec la portion inspectée du récipient, qui résulte en la lumière d'inspection retour **LIrₐ**, **LIr_{b}**, peut comprendre une interaction par réflexion sur une surface de la portion inspectée (comme dans le cas de la première installation d'inspection **16a** de la **Fig.1**), une interaction par une transmission au travers du matériau constitutif de la portion inspectée du récipient (comme dans le cas de la deuxième installation d'inspection **16b** de la **Fig.1**)**,** ou une combinaison de transmission et réflexion. Au cours de cette interaction, la lumière peut subir diverses modifications par réfraction, diffraction, réflexion, modification de spectre, diffusion etc., qui transforment la lumière d'inspection incidente **LIiₐ, LIi_{b}**, produisant une lumière d'inspection retour **LIrₐ**, **LIr_{b}**.

Pour recueillir une lumière d'inspection retour **LIrₐ**, **LIr_{b},** l'installation d'inspection peut comprendre éventuellement un collecteur optique recueillant la lumière d'inspection retour résultant de l'interaction de la lumière d'inspection incidente avec la portion inspectée d'un récipient placé dans la zone d'inspection de l'installation. Dans l'exemple illustré, le collecteur optique comporte un objectif **26a, 26b** appartenant à une caméra d'inspection **28a, 28b.** Dans le présent texte, un collecteur optique peut comporter une association d'objectifs ou encore d'autres éléments optiques comprenant par exemple un ou plusieurs parmi des lentilles, des miroirs optiques, des lames partiellement réfléchissantes, des prismes, des fibres optiques, des diaphragmes ou trous d'épingles, etc.

Dans le présent texte, le spectre d'une lumière, incidente ou retour, s'entend comme l'ensemble des longueurs d'onde contenues dans cette lumière, donc pour lesquelles l'intensité de la lumière n'est pas nulle. Le spectre peut être un spectre continu, peut comporter plusieurs portions continues disjointes et/ou peut comporter des raies discrètes. Dans le présent texte, deux ensembles de longueurs d'onde sont disjoints s'ils ne comprennent pas de longueur d'onde commune.

Le procédé d'inspection optique peut convertir, dans une bande spectrale d'inspection, la lumière d'inspection retour recueillie en une image numérique d'inspection multipoints linéaire ou bidimensionnelle **Iiₐ**, **Ii_{b}**. La bande spectrale d'inspection est l'ensemble des longueurs d'onde d'une lumière qui peuvent être converties en image numérique d'inspection. C'est une caractéristique de la conversion, et éventuellement de la collecte de la lumière retour, et notamment des moyens mis en œuvre pour assurer cette conversion, et éventuellement des moyens mis en œuvre pour cette collecte. La bande spectrale d'inspection peut comprendre l'intégralité du spectre d'inspection retour, auquel cas l'intégralité de l'information lumineuse contenue dans la lumière d'inspection retour est convertie dans l'image d'inspection. La bande spectrale d'inspection peut ne comprendre qu'une partie du spectre d'inspection retour, auquel cas seule l'information lumineuse contenue dans cette partie du spectre d'inspection retour est utilisée pour former l'image numérique d'inspection. Inversement, le spectre d'inspection retour peut ne comprendre qu'une partie de la bande spectrale d'inspection.

Dans le présent texte, une bande spectrale s'entend comme un ensemble de longueurs d'onde. Cet ensemble est de préférence continu entre deux longueurs d'ondes d'extrémité, mais peut comporter plusieurs portions continues disjointes et/ou peut comporter des longueurs d'ondes discrètes.

Dans ce texte, la distribution spectrale d'intensité d'une lumière est l'ensemble des valeurs relatives d'intensités pour chaque composante de longueur d'onde d'une lumière.

Typiquement, pour cette opération de conversion, on utilise un capteur photoélectrique d'inspection linéaire ou bidimensionnel, par exemple le capteur d'une caméra **28a, 28b** d'inspection. Typiquement, le collecteur optique forme, sur une surface sensible du capteur photoélectrique, l'image optique stigmatique de la portion inspectée du récipient. La surface sensible du capteur photoélectrique comporte par exemple une ou plusieurs séries d'éléments photoélectriques juxtaposés, dans le cas d'un capteur bidimensionnel, selon une grille présentant des rangées et des colonnes perpendiculaires. Le capteur photoélectrique d'inspection convertit, dans la bande spectrale d'inspection, la lumière d'inspection retour recueillie en une image numérique d'inspection multipoints linéaire ou bidimensionnelle **IIₐ**, **II_{b}**, composée de pixels. L'image numérique d'inspection **IIₐ**, **II_{b}** correspond alors à l'image optique stigmatique de la portion inspectée du récipient qui est formée sur la surface sensible du capteur d'inspection par le collecteur de lumière d'inspection.

La bande spectrale d'inspection désigne dans le texte la réponse spectrale du capteur d'inspection, c'est-à-dire la plage de longueurs d'onde pour lesquelles le capteur délivre, au-delà d'un seuil de détection minimale, un signal supérieur au bruit. Par exemple, certains capteurs ne sont sensibles que pour le rayonnement dans le domaine visible, que l'on définit dans ce texte comme constitué par le spectre des ondes électromagnétiques dans une plage de longueur d'ondes comprise entre 400 et 780 nanomètres, d'autres sont sensibles dans un domaine infrarouge, par exemple sur une plage de longueur d'ondes comprise entre 780 et 1400 nanomètres, soit exclusivement sur ce domaine infrarouge, soit à la fois sur ce domaine infra rouge et sur tout ou partie du domaine visible. La bande spectrale d'inspection peut aussi être adaptée par la présence de filtres spectraux interposés sur le trajet de la lumière d'inspection retour, par exemple dans le collecteur optique, y compris des filtres constitués par les matériaux ou revêtements mis en œuvre pour la réalisation des éléments optiques de ce collecteur. La bande spectrale d'inspection est donc une caractéristique du capteur et du collecteur d'inspection. Dans l'exemple de réalisation, c'est donc une caractéristique de la caméra d'inspection **28a, 28b.**

Dans le présent texte, un capteur photoélectrique peut être par exemple un capteur de technologie CCD, tri-CCD ou CMOS, comportant au moins un réseau de photo-sites, c'est-à-dire d'éléments photosensibles tels que des photodiodes ou bolomètres.

De préférence l'image numérique d'inspection **IIₐ**, **II_{b}** comporte au moins 128 pixels.

Le procédé peut éventuellement réaliser une unique image numérique d'inspection **IIₐ**, **II_{b}** pour un récipient donné et pour une inspection donnée réalisée par une installation d'inspection optique donnée.

Toutefois, généralement, au sens du présent texte, une image numérique pourra comprendre une série d'images numériques d'un récipient donné prises par la même installation optique. Par exemple, une série d'images numériques d'un récipient donné, formée par l'installation optique, peut comporter une série d'images numériques acquises à une fréquence de 10 images par seconde.

De manière connue de l'homme du métier, le procédé d'inspection optique implique d'analyser l'image numérique d'inspection **IIₐ**, **II_{b}** pour déterminer un résultat d'inspection, par exemple lié à la détection ou la détermination d'au moins une caractéristique physique du récipient inspecté. Ces techniques connues par l'homme du métier ne sont pas décrites ici en détail.

Dans le présent texte, dans le cas où l'image numérique comprend une série d'images numériques d'un récipient donné, l'analyse peut comprendre l'analyse d'une seule de ces images et/ou de plusieurs de ces images et/ou d'une combinaison ou d'une transformation de ces images. L'analyse comprend généralement une étape de segmentation, permettant de séparer des objets (en l'occurrence un récipient ou une caractéristique physique précise de ce récipient) par rapport à un fond de l'image, puis ces objets sont analysés ou mesurés afin d'en déterminer des caractéristiques photométriques, morphologiques ou géométriques. Pour détecter un objet dans une image, on utilise donc une propriété photométrique de l'objet (ou de l'ensemble des pixels images de l'objet) dans l'image numérique (intensité, couleur ou niveau de gris ou leur dérivée ou leur répartition) qui le distingue du fond sur lequel s'inscrit l'objet (ou de l'ensemble des pixels image du fond sur lequel s'inscrit l'objet) avec un contraste suffisant.

L'analyse d'images numériques d'inspection est généralement réalisée informatiquement par une unité informatique **30** configurée pour déterminer le résultat d'inspection, par exemple une caractéristique physique du récipient inspecté. La caractéristique physique est bien entendue celle qui doit être inspectée par le procédé d'inspection optique ou une caractéristique qui lui est directement liée.

Dans le présent texte, une unité informatique peut comprendre de manière connue notamment un microprocesseur, des bus d'entrée/sortie de données, de la mémoire, des connexions à un réseau informatique, et/ou un afficheur. L'unité informatique **30** peut être une unité informatique dédiée **30a, 30b** à une installation optique, d'inspection ou de reconnaissance, ou peut-être partagée entre plusieurs installations optiques. L'unité informatique **30** peut encore être partagée avec d'autres éléments de la ligne **10.** Il peut s'agir par exemple d'une unité centralisée de pilotage de la ligne ou d'une partie de celle-ci. L'unité informatique **30** peut être une unité virtuelle composée de tout ou partie de plusieurs unités informatiques physiques fonctionnant en réseau.

L'analyse informatique d'images numériques produit un résultat d'inspection qui peut comprendre un résultat binaire (vrai/faux, présent/absent, conforme/non-conforme, ...) et/ou un résultat qualitatif, voire quantitatif, par exemple sous la forme d'une ou plusieurs mesures.

Il est prévu une méthode de vérification d'un procédé d'inspection optique, et un système de vérification d'une installation d'inspection optique. La méthode de vérification comporte de préférence une étape consistant à inspecter, conformément au procédé d'inspection optique, donc par exemple à l'aide de l'installation d'inspection optique, un récipient témoin.

Ensuite, on peut prévoir de comparer, de préférence informatiquement, un résultat d'inspection du récipient témoin déterminé par le procédé d'inspection optique à un résultat d'inspection attendu du récipient témoin. Cette comparaison, si elle est faite informatiquement, peut être effectuée par l'unité informatique **30,** ou par une autre unité informatique.

Par cette comparaison, on peut ainsi soumettre le procédé et l'installation à une vérification de son bon fonctionnement.

La méthode de vérification peut par exemple comporter l'étape d'insérer, dans une série de récipients à inspecter, au moins un récipient témoin ayant un résultat d'inspection attendu, par exemple du fait de la présence dans le récipient témoin d'une caractéristique physique connue, et à vérifier que le procédé d'inspection détermine le résultat d'inspection attendu pour le récipient témoin.

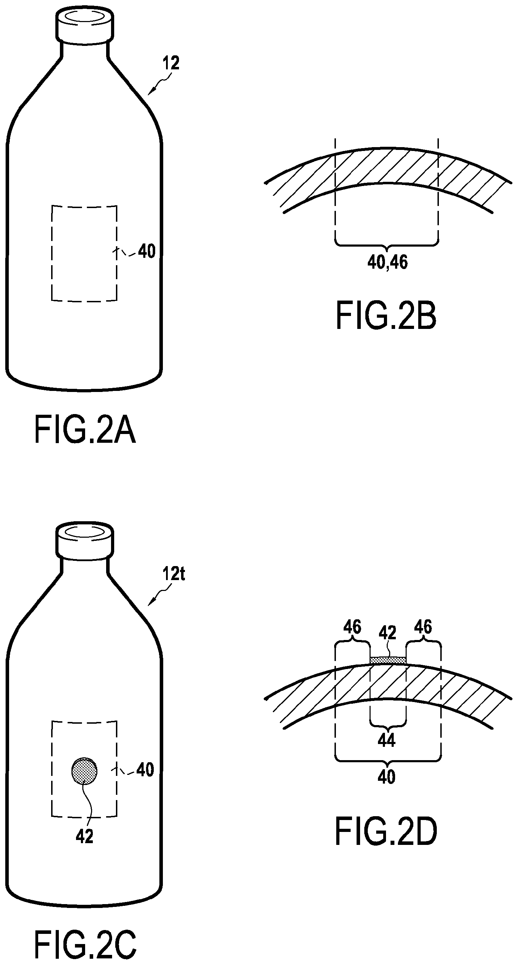

Pour cela, comme on le voit plus particulièrement sur les **Figs. 2C** et **2D****,** on prévoit au moins un récipient témoin **12t** comportant une marque témoin **42** apposée sur une portion de marquage **40** du récipient témoin **12t.** La portion de marquage **40** est une portion du récipient qui est destinée à porter la marque témoin **42.** Par comparaison, un récipient standard **12** correspondant, illustré aux **Figs. 2A** et **2B****,** ne présente pas de marque témoin sur la portion de marquage **40,** à savoir sur sa portion correspondante à la portion de marquage **40** du récipient témoin **12t.** La portion de marquage peut, dans le cas d'une bouteille, comprendre tout ou partie de la bague, de la surface annulaire du buvant, du col, de l'épaule, du fût, du jable, du fond, etc., ou une combinaison de ces parties de la bouteille.

La portion de marquage marquée **44** est la partie de ladite portion de marquage qui est effectivement recouverte par la marque témoin **42** après apposition de la marque témoin **42.** Elle est donc formée par la superposition du matériau du récipient et du matériau de la marque témoin **42.**

La marque **42** a une forme, dont la géométrie est de préférence définie et peut comporter un motif ou un ensemble de motifs géométriques, éventuellement apte à coder un identifiant. La portion de marquage **40** n'est pas nécessairement recouverte entièrement par la marque témoin **42** lorsque la marque y est apposée.

Une portion de marquage libre de marque, dite portion de marquage libre **46,** désigne donc soit une portion de marquage totalement dépourvue de marque témoin, dans le cas d'un récipient standard **12** comme illustré aux figures **2A** et **2B****,** soit l'espace dans la portion de marquage **40** qui n'est pas recouvert par la marque témoin **42** lorsque la marque témoin apposée ne la recouvre pas entièrement, comme dans le cas du récipient témoin **12t** illustré aux **Figs. 2C** et **2D****.** C'est généralement le cas lorsque la marque comporte un motif identifiant.

Le récipient témoin **12t** est un récipient pour lequel on connait un résultat d'inspection attendu, par exemple du fait de la présence dans le récipient témoin d'au moins une caractéristique physique particulière connue. Cette caractéristique physique est par exemple l'une de celles évoquées plus haut.

La caractéristique connue est de préférence celle ou l'une de celles qui est déterminée par le procédé d'inspection optique considéré. Il peut s'agir de son inverse.

Le résultat attendu du récipient témoin peut avoir été déterminé par le procédé d'inspection que l'on veut vérifier ou par tout autre procédé automatique ou manuel, par l'installation que l'on veut vérifier ou par une autre installation. Il peut avoir été déterminé ou confirmé ou complété par un opérateur, visuellement ou autrement, avec ou sans outil.

Le récipient témoin est de préférence un récipient qui, hormis une ou plusieurs caractéristique(s) physique(s) particulière(s) connue(s), est identique à un récipient standard du flux de récipients circulant normalement sur la ligne. La présente invention est applicable à une installation et/ou une ligne sur laquelle circulent plusieurs types de produits, autrement dit différents types de récipients standards, notamment en utilisant différents types de récipients témoins similaires aux différents types de récipients standards.

Un récipient standard présente ainsi une portion de marquage entièrement libre de marque, tandis qu'un récipient témoin présente ainsi une portion de marquage marquée par la présence de la marque témoin. Pour un récipient témoin donné, la portion de marquage libre est la portion de marquage avant que la marque témoin n'y soit apposée ou la partie de cette portion de marquage qui est laissée libre lorsque la marque ne recouvre que partiellement la portion de marquage.

La marque témoin est de préférence une marque qui est apposée sur le récipient après sa fabrication.

La marque témoin est de préférence apposée sur une surface de la portion de marquage du récipient, de préférence sur une surface externe de la portion de marquage.

De préférence, pour les modes de réalisation dans lequel le procédé d'inspection comporte une transmission au travers de la portion de marquage, la marque témoin est réalisée de manière à être sans incidence sur la trajectoire d'un rayon lumineux, au moins dans la bande spectrale d'inspection.

La marque témoin comporte par exemple une fine couche d'un matériau de marquage ou d'impression, de préférence d'épaisseur constante, sur une surface de la portion de marquage du récipient témoin. Dans certains modes de réalisation, l'épaisseur de la couche peut être inférieure au micromètre. La marque témoin peut être constituée par exemple d'une encre et/ou d'un vernis et/ou d'une peinture.

Bien entendu le récipient et l'installation sont adaptés pour que le récipient puisse être positionné dans la zone d'inspection de l'installation d'inspection optique. La marque témoin est apposée sur une portion de marquage du récipient témoin qui peut être comprise dans la portion inspectée du récipient qui est inspectée par l'installation d'inspection.

La marque témoin peut comporter un motif (qui désigne aussi bien un ensemble de motifs géométriques), apte à coder un identifiant permettant d'identifier le récipient témoin de manière unique, par exemple à la manière d'un numéro de série. Alternativement, le motif de la marque témoin peut comporter un identifiant permettant d'identifier le récipient témoin comme appartenant à une catégorie déterminée de récipients témoins, associée à un même résultat d'inspection attendu, et/ou à une même caractéristique physique connue, parmi plusieurs catégories de récipient témoins, associées chacune à un même résultat d'inspection, et/ou à au moins une caractéristique physique connue distincte pour chaque catégorie. Dans les deux cas, la marque témoin peut comporter, en tant qu'identifiant, un numéro inscrit sous la forme de caractères directement lisibles, par exemple en chiffres arabes ou en chiffres romains, ou sous la forme d'un code, par exemple un code-barres ou un code DataMatrix ou équivalent, ou encore sous la forme d'un code géométrique, la géométrie du marquage pouvant être utilisée en tant qu'identifiant. Dans l'exemple illustré à la **Fig. 1****,** la marque témoin **42** comporte une série de points circulaires agencés selon un arc de cercle sur la surface de buvant annulaire d'un récipient témoin **12t**. Une telle marque peut comporter un identifiant qui se déduit par exemple du nombre et/ou de l'espacement relatif des points de la marque **42.** Dans cet exemple, la surface du buvant constitue la portion de marquage, et il est à noter que si l'installation est une inspection de la surface du buvant, alors cette portion est également la portion inspectée.

Alternativement la marque témoin peut être un simple indicateur du fait que le récipient est un récipient témoin, sans être associée à une caractéristique physique particulière. Dans un tel cas, la marque témoin peut être une simple tache, ou pavé, dont la taille et la géométrie seront uniquement choisis pour en assurer une bonne détectabilité par le procédé et l'installation de reconnaissance.

Un procédé de reconnaissance optique d'un récipient témoin **12t** peut comporter différentes étapes, certaines pouvant être simultanées.

Dans un procédé de reconnaissance optique, on peut illuminer au moins la portion de marquage du récipient avec une lumière de reconnaissance incidente **LRi** ayant un spectre de reconnaissance incident. La portion du récipient qui est illuminée peut être plus large que la portion de marquage s'il existe une incertitude sur la position exacte de la portion de marquage. Il peut donc s'agir d'une position attendue de marquage, plus large, pouvant éventuellement recouvrir une partie importante du récipient. Dans l'exemple de la **Fig. 1****,** l'installation de reconnaissance **32** est destinée à reconnaitre une marque apposée sur la surface annulaire de buvant **20** d'un récipient, cette surface étant donc la portion attendue de marquage. On note donc que, dans cet exemple de réalisation, la portion de marquage d'un récipient témoin **12t** coïncide au moins en partie avec la portion inspectée de ce récipient témoin **12t** lorsque celui-ci est inspecté par l'une au moins des deux installations d'inspection.

L'illumination de la portion de marquage peut être effectuée en utilisant une source **34** de lumière de reconnaissance incidente illuminant une zone de reconnaissance **35** de l'installation et ayant un spectre de reconnaissance incident.

La zone de reconnaissance **35** de l'installation correspond à la portion d'espace dans laquelle il est nécessaire de positionner la portion de marquage d'un récipient pour que la marque témoin puisse être effectivement reconnue par l'installation. Dans l'exemple de la **Fig.1****,** l'installation de reconnaissance **32** est séparée des installations d'inspection **16a, 16b.** Ainsi, la zone de reconnaissance **35** est physiquement disjointe de la zone d'inspection **18a, 18b,** ici des deux installations d'inspection. La zone de reconnaissance **35** correspond, par rapport à la zone d'inspection **18a, 18b,** à des positions différentes du récipient le long de la trajectoire de convoyage. Cependant, on pourrait prévoir, au moins dans certains cas, qu'une zone de reconnaissance puisse être au moins en partie confondue, voire confondue, avec une zone d'inspection, notamment dans le cas où la portion de marquage d'un récipient est au moins en partie confondue avec la portion inspectée de ce récipient. On pourrait de manière plus générale, au moins dans certains cas, prévoir qu'une installation d'inspection et une installation de reconnaissance, tout en inspectant respectivement une portion inspectée et une portion de marquage d'un récipient qui seraient éventuellement disjointes, soient agencées à la même position sur la ligne, de telle sorte que les zones d'inspection et de reconnaissance, tout en étant éventuellement disjointes, correspondraient à une même position du récipient le long de la trajectoire de convoyage, donc à un même poste.

Différents types de sources **34** de lumière de reconnaissance incidente **LRi** peuvent être mis en œuvre, toute source **34** de lumière de reconnaissance incidente émettant un rayonnement dans le domaine optique. La source de lumière de reconnaissance incidente comprend de préférence une source dédiée qui peut comporter éventuellement plusieurs sources élémentaires, identiques ou non. Elle peut comprendre une ou plusieurs source(s) de lumière uniforme, de lumière diffuse, de lumière directionnelle, étendue et/ou contraire ponctuelle, etc.

Le procédé de reconnaissance optique peut recueillir une lumière de reconnaissance retour **LRr** résultant de l'interaction de la lumière de reconnaissance incidente **LRi** avec la portion de marquage du récipient, et avec une marque témoin éventuelle sur cette portion marquage, la lumière de reconnaissance retour **LRr** ayant un spectre de reconnaissance retour.

L'interaction de la lumière de reconnaissance incidente **LRi** avec la portion de marquage du récipient, marquée ou non, qui résulte en la lumière de reconnaissance retour **LRr** peut comprendre par exemple une interaction par réflexion sur une surface de la portion de marquage, marquée ou libre, ou une interaction par une transmission au travers du matériau constitutif de la portion de marquage, y compris éventuellement du matériau constitutif de la marque témoin. Comme on le verra plus loin, l'interaction peut comprendre un phénomène de luminescence dans lequel la lumière de reconnaissance incidente **LRi** est au moins en partie absorbée par la marque témoin et dans lequel, du fait de cette absorption, le matériau de la marque témoin émet une lumière de reconnaissance retour, **LRr** comprenant une lumière émise par le matériau luminescent. Au cours de cette interaction, la lumière peut subir diverses modifications comme la réfraction, la réflexion, la modification de spectre, la diffusion etc., qui transforment la lumière de reconnaissance incidente **LRi** en lumière de reconnaissance retour **LRr**.

Pour recueillir une lumière de reconnaissance retour, l'installation de reconnaissance peut éventuellement comprendre un collecteur optique recueillant la lumière de reconnaissance retour résultant de l'interaction de la lumière de reconnaissance incidente avec la portion de marquage, et éventuellement avec la marque témoin, d'un récipient dont la portion de marquage est placée dans la zone de reconnaissance de l'installation. Dans l'exemple illustré, le collecteur optique de reconnaissance comporte un objectif **36** appartenant à une caméra de reconnaissance **38.** De préférence l'objectif **36** permet de réaliser une image de la portion de marquage qui conserve la topologie d'un motif éventuel de la marque témoin et donc conserve si besoin dans l'image optique, l'information d'identification éventuellement portée par le motif de la marque.

Le procédé de reconnaissance optique peut convertir, dans une bande spectrale de reconnaissance, la lumière de reconnaissance retour **LRr** recueillie en une image numérique de reconnaissance multipoints **IR,** linéaire ou bidimensionnelle. La bande spectrale de reconnaissance est l'ensemble des longueurs d'onde d'une lumière qui peuvent être converties en image numérique de reconnaissance. C'est une caractéristique de la conversion, et éventuellement de la collecte de la lumière retour, et notamment des moyens mis en œuvre pour assurer cette conversion, et éventuellement des moyens mis en oeuvre pour cette collecte. La bande spectrale de reconnaissance peut comprendre l'intégralité du spectre de reconnaissance retour, auquel cas l'intégralité de l'information lumineuse contenue dans la lumière de reconnaissance retour est convertie dans l'image numérique de reconnaissance. La bande spectrale de reconnaissance peut ne recouper qu'une partie du spectre de reconnaissance retour, auquel cas seule l'information lumineuse contenue dans cette partie du spectre de reconnaissance retour est utilisée pour former l'image numérique de reconnaissance. Inversement, le spectre de reconnaissance retour peut ne comprendre qu'une partie de la bande spectrale de reconnaissance.

Typiquement, pour cette opération de conversion, on utilise un capteur photoélectrique de reconnaissance linéaire ou bidimensionnel, par exemple le capteur d'une caméra **38** de reconnaissance. Typiquement, le collecteur optique forme, sur une surface sensible du capteur photoélectrique, l'image optique stigmatique de la portion de marquage du récipient. La surface sensible du capteur photoélectrique comporte par exemple une ou plusieurs séries d'éléments photorécepteurs, notamment photo-électriques juxtaposés selon, dans le cas d'un capteur bidimensionnel, une grille présentant des rangées et des colonnes perpendiculaires. Le capteur photoélectrique de reconnaissance peut être de même technologie que le capteur photoélectrique d'inspection, ou de technologie différente. Le capteur photoélectrique de reconnaissance convertit, dans la bande spectrale de reconnaissance, la lumière de reconnaissance retour **LRr** recueillie en une image numérique de reconnaissance multipoints linéaire ou bidimensionnelle **IR,** composée de pixels. L'image numérique de reconnaissance **IR** correspond alors à l'image optique stigmatique de la portion de marquage du récipient qui est formée sur la surface sensible du capteur par le collecteur de lumière.

Comme expliqué plus haut au sujet de la bande spectrale d'inspection, la bande spectrale de reconnaissance dépend notamment de la plage de longueur d'onde de sensibilité du capteur de reconnaissance et peut aussi être adaptée par la présence de filtres spectraux dans le collecteur optique de reconnaissance. La bande spectrale de reconnaissance est donc une caractéristique du capteur de reconnaissance et du collecteur de reconnaissance. Dans l'exemple de réalisation, c'est donc une caractéristique de la caméra de reconnaissance **38.**

De préférence l'image numérique de reconnaissance **IR** comporte au moins 128 pixels.

Comme décrit plus haut concernant le procédé d'inspection, le procédé de reconnaissance peut réaliser une unique image numérique de reconnaissance **IR** pour un récipient donné, ou une série d'images numériques de reconnaissance d'un récipient donné.

L'analyse d'images numériques de reconnaissance est généralement réalisée informatiquement par une unité informatique **30** configurée pour reconnaitre une éventuelle marque témoin sur un récipient témoin. Une telle unité informatique **30** peut être une unité dédiée, ou être commune avec une autre installation optique, notamment une installation optique d'inspection **16a, 16b,** ou avec d'autres installations de la ligne comme expliqué plus haut.

Dans la mise en œuvre de la méthode de vérification, on peut prévoir d'analyser l'image numérique de reconnaissance pour reconnaitre la marque témoin éventuellement présente sur le récipient qui est situé dans la zone de reconnaissance, selon des techniques d'analyse d'image connues de l'homme du métier, par exemple analogues aux techniques décrites plus haut concernant le procédé d'inspection.

L'analyse informatique d'images numériques de reconnaissance produit un résultat de reconnaissance qui peut comprendre un résultat binaire (vrai/faux, présent/absent, conforme/non-conforme, témoin/ non témoin..). Dans ce cas, on identifie par exemple simplement le récipient comme étant un récipient témoin, par détection de la marque, sans discrimination quant à une caractéristique particulière du récipient. Dans certains cas, le procédé de reconnaissance permet d'identifier le récipient témoin de manière unique ou comme appartenant à une catégorie déterminée de récipients témoins parmi plusieurs catégories distinctes de récipient témoins, par détection et reconnaissance de la marque. La reconnaissance de la marque peut être basée sur la reconnaissance de la géométrie ou d'un motif de la marque. Elle peut aussi être basée sur la reconnaissance d'une transformation spectrale particulière de la lumière incidente par interaction avec la marque. La catégorie déterminée de récipients témoins est par exemple l'ensemble des récipients témoins associé à un même résultat d'inspection attendu distinct, par exemple présentant une même caractéristique physique connue, parmi plusieurs catégories distinctes de récipient témoins, associées chacune à un résultat attendu distinct, par exemple présentant au moins une caractéristique physique connue distincte pour chaque catégorie. Ainsi, une catégorie est par exemple : « témoins sans défaut », « témoins trop haut », « témoins avec fissure à la bague ». Si l'identifiant est unique pour chaque témoin, la caractéristique connue peut être une valeur de mesure, par exemple « hauteur = 252 mm ».

De préférence l'unité informatique comporte un moyen de mémorisation des relations de correspondance entre des identifiants de marques témoins et des résultats d'inspection attendus pour des récipients témoins portant lesdites marques témoins. Ainsi, des identifiants sont associés en mémoire à des catégories ou à des valeurs de mesure. Une implémentation simple consiste à renseigner des tables de correspondance dans la mémoire de l'unité de traitement informatique.

De préférence, la marque témoin possède au moins une caractéristique connue détectable dans l'image numérique de reconnaissance, plus préférentiellement, une combinaison de caractéristiques connues détectables dans l'image de reconnaissance.

De préférence, la marque témoin, apposée sur la portion de marquage d'un récipient témoin, possède des propriétés optiques de transformation spectrale qui confèrent à la portion de marquage marquée des propriétés optiques de transformation spectrales qui :
- pour le procédé de reconnaissance, diffèrent de celles de la portion de marquage libre dans une portion utile du spectre de reconnaissance incident et/ou une portion utile de la bande spectrale de reconnaissance ;
- pour le procédé d'inspection, sont identiques à celles de la portion de marquage libre dans l'ensemble de la portion utile du spectre d'inspection incident et dans l'ensemble de la portion utile de la bande spectrale d'inspection.

La portion utile respectivement du spectre incident ou de la bande spectrale, d'inspection ou de reconnaissance, sont respectivement le sous-ensemble des longueurs d'ondes du spectre incident ou de la bande spectrale qui sont effectivement utilisées pour l'obtention de l'information lumineuse contenue dans l'image numérique correspondante pour les besoins du procédé correspondant.

Ainsi, la portion utile du spectre d'inspection (respectivement de reconnaissance) incident est celle qui produit, après interaction avec la portion inspectée (respectivement avec la portion de marquage) du récipient, une lumière d'inspection (respectivement de reconnaissance) retour dans la bande spectrale d'inspection (respectivement de reconnaissance).

La portion utile de la bande spectrale d'inspection, (respectivement de reconnaissance) est la portion de la bande spectrale qui recoupe le spectre d'inspection retour (respectivement de reconnaissance retour). Pour une bande spectrale donnée, d'inspection ou de reconnaissance, sa partie utile dépend notamment du spectre incident correspondant et de la transformation spectrale qui est provoquée sur ce spectre incident par interaction avec la portion de marquage marquée et/ou libre.

Par exemple, dans le cas d'un procédé d'inspection dans lequel la bande spectrale d'inspection est limitée à l'infra-rouge, la portion utile du spectre d'inspection incident est celle qui produit, après interaction avec la portion inspectée du récipient, la portion de lumière d'inspection retour dont le spectre se situe dans le domaine de l'infra-rouge. Selon un autre exemple, dans le cas d'un procédé de reconnaissance dans lequel le spectre de reconnaissance incident produit, après interaction avec la portion de marquage, une lumière de reconnaissance retour dont le spectre se situe dans un domaine limité par exemple au domaine du bleu, la portion utile de la bande spectrale de reconnaissance est celle qui recoupe le spectre de reconnaissance retour, à savoir le domaine du bleu.

Les propriétés optiques de transformation spectrale consistent par exemple en la faculté ou non de modifier, donc de transformer, la distribution spectrale d'intensité d'une lumière incidente.

Dans le présent document, les propriétés optiques de transformation spectrale d'un matériau désignent la manière dont un matériau interagit avec la lumière, cette interaction étant considérée en fonction des longueurs d'ondes, si bien que si l'interaction a des conséquences différentes pour des longueurs d'ondes différentes, la distribution spectrale d'intensité contenue dans la lumière est modifiée, donc transformée, si on compare la lumière incidente et la lumière retour qui résulte de l'interaction de la lumière incidente avec le matériau. La transformation spectrale comprend généralement une absorption, partielle ou complète, de certaines longueurs d'ondes de la lumière incidente. Elle peut comprendre également, par exemple dans le cas d'un matériau photoluminescent, une adjonction ou un renforcement de certaines longueurs d'ondes dans le spectre retour par rapport au spectre incident. Dans une transformation modificative, le spectre, au sens de l'ensemble des longueurs d'ondes présentes avec une intensité non nulle dans une lumière, peut être inchangé, avec seulement une modification de la distribution spectrale d'intensité de ces longueurs d'ondes. Une transformation neutre de la distribution spectrale d'intensité contenue dans une lumière correspond au cas où la distribution spectrale d'intensité contenue dans la lumière n'est pas modifiée dans la bande spectrale considérée.

Avantageusement, de telles propriétés de la marque témoin induisent que la marque témoin est détectable dans l'image numérique de reconnaissance obtenue dans le procédé de reconnaissance, par exemple obtenue au moyen du capteur de reconnaissance, lorsque la marque témoin est illuminée par la source de lumière de reconnaissance, mais non détectable dans l'image numérique d'inspection obtenue dans le procédé d'inspection, par exemple obtenue par le capteur photoélectrique d'inspection lorsque la marque témoin est illuminée par la source de lumière d'inspection.

Une marque témoin peut être considérée comme détectable dans l'image numérique de reconnaissance si les pixels qui en sont l'image sont séparables des pixels images du fond sur lequel elle s'inscrit, notamment si les caractéristiques photométriques des pixels qui en sont l'image, par exemple en termes de niveau de gris, de couleur et/ou de contraste, diffèrent, localement ou globalement, des caractéristiques photométriques des pixels image de la portion de marquage libre, donc du fond, avec un écart de détection permettant un degré de confiance suffisant. Par exemple l'écart de niveau de gris entre les pixels images de la marque et les pixels images du fond est au moins supérieur au bruit électronique de l'image. Ces caractéristiques photométriques différentes permettent de traduire éventuellement une texture et/ou une forme ou une combinaison de ces facteurs, qui diffère(nt) de la texture et/ou forme ou combinaison possiblement présente dans un récipient sans marque témoin.

A contrario, une marque est considérée comme non-détectable dans l'image numérique d'inspection lorsque, dans l'image d'inspection, les pixels qui en sont l'image ne sont pas séparables du ceux du fond sur lequel elle s'inscrit, i.e. par exemple qu'ils présentent un niveau de lumière couleur et/ou de contraste ne différant de ceux du fond, donc de la portion libre de marque, que d'un écart proche ou inférieur au niveau de bruit.

Le fond d'une image numérique peut être considéré comme étant l'image numérique de la même portion, notamment de la portion de marquage, d'un récipient identique dépourvu de marque témoin.

La mise en oeuvre d'une méthode selon l'invention, ou l'utilisation d'un système selon l'invention, seront particulièrement avantageux lorsque la portion de marquage d'un récipient témoin recoupe au moins en partie la portion inspectée du récipient témoin qui est inspectée dans le procédé d'inspection. En effet, dans ce cas, la présence de la marque témoin sur la portion inspectée n'empêchera pas que la vérification puisse être opérée puisque, lors de la mise en œuvre du procédé d'inspection, la marque témoin pourra être considérée comme indétectable.

Dans certains modes de réalisation, les propriétés optiques de transformation spectrale de la portion de marquage marquée diffèrent de celles de la portion de marquage libre dans une partie du spectre de reconnaissance incident qui n'est pas comprise dans le spectre d'inspection incident. Cela est un moyen de permettre que la marque témoin soit détectable dans l'image numérique de reconnaissance.

Dans certains modes de réalisation, les propriétés optiques de transformation spectrale de la marque diffèrent de celles de la portion de marquage libre de telle sorte que, lorsqu'elles sont illuminées par la lumière de reconnaissance incidente, les lumières de reconnaissance retour correspondantes pour la marque et pour la portion de marquage libre sont différentes dans la bande spectrale de reconnaissance. Cela est un autre moyen de permettre que la marque témoin soit détectable dans l'image numérique de reconnaissance.

Par ailleurs, les propriétés optiques de transformation spectrale de la marque témoin sont de préférence telles que, lorsqu'elle est illuminée par la lumière de d'inspection incidente, les lumières d'inspection retour pour la portion de marquage marquée et pour la portion de marquage libre sont identiques dans la bande spectrale d'inspection, au moins dans sa portion utile. Cela est un moyen pour permettre que la marque témoin ne soit pas détectable dans l'image numérique de d'inspection.

La différence entre les propriétés optiques de transformation spectrale de la portion de marquage marquée et celles de la portion de marquage libre sont considérées ici comme résultant au moins en partie de la présence de la marque témoin sur la portion de marquage, de préférence résultant exclusivement de la présence de la marque témoin sur la portion de marquage.

Les propriétés optiques de transformation spectrale de la marque témoin peuvent provoquer une transformation entre la distribution spectrale d'intensité de la lumière de reconnaissance, respectivement d'inspection, incidente et la distribution spectrale d'intensité de la lumière de reconnaissance, respectivement d'inspection, retour qui résulte de l'interaction de la lumière de reconnaissance, respectivement d'inspection, incidente avec la portion de marquage marquée. De même, les propriétés optiques de transformation spectrale de la portion de marquage libre, peuvent provoquer une transformation entre la distribution spectrale d'intensité de la lumière de reconnaissance, respectivement d'inspection, incidente et la distribution spectrale d'intensité de la lumière de reconnaissance, respectivement d'inspection, retour qui résulte de l'interaction de la lumière de reconnaissance, respectivement d'inspection, incidente avec la portion de marquage libre. Suivant les cas, ces modifications peuvent être des transformations modificatives, ou des transformations neutres.

La différence entre les propriétés optiques de transformation spectrale de la marque et celles de la portion de marquage libre peuvent donc induire la différence entre les transformations subies par une lumière incidente par interaction respectivement avec la portion de marquage marquée et la portion de marquage libre.

Une transformation modificative entre la distribution spectrale d'intensité d'une lumière incidente et la distribution spectrale d'intensité de la lumière retour qui résulte de l'interaction de la lumière incidente avec soit la portion de marquage libre, soit avec la portion de marquage marquée, peut comprendre l'absorption, la réflexion, la diffraction et/ou la réfraction d'une bande spectrale témoin. Elle peut comprendre un phénomène de photoluminescence, notamment de fluorescence, avec par exemple absorption totale ou partielle d'une bande spectrale d'excitation, et/ou émission d'un spectre de luminescence.

Une transformation modificative de la distribution spectrale d'intensité d'une lumière sur un spectre considéré signifie que les valeurs d'intensités de ses composantes de longueurs d'ondes sont modifiées sur au moins une partie de l'étendue du spectre considéré.

Deux transformations modificatives diffèrent sur un spectre donné ou une bande spectrale donnée notamment si les modifications des valeurs d'intensité sont différentes sur au moins une partie du spectre ou de la bande spectrale considéré(e).

Dans certains modes de réalisation, les propriétés optiques de transformation spectrale de la portion de marquage marquée sont telles que :
- l'interaction de la lumière de reconnaissance avec la portion de marquage marquée provoque une transformation de reconnaissance, modificative, entre la distribution spectrale d'intensité de la lumière de reconnaissance incidente et la distribution spectrale d'intensité de la lumière de reconnaissance retour, et
- l'interaction de la lumière de reconnaissance avec la portion de marquage libre provoque une transformation de non reconnaissance, neutre ou modificative, entre la distribution spectrale de la lumière de reconnaissance incidente et la distribution spectrale de la lumière de reconnaissance retour, et
- la transformation de reconnaissance diffère de la transformation de non reconnaissance de la bande spectrale de reconnaissance, notamment au moins dans une partie de sa portion utile.

Notamment pour un tel mode de réalisation, l'interaction de la lumière d'inspection avec la portion de marquage marquée et avec la portion de marquage libre provoquent la même transformation d'inspection, neutre ou modificative, entre la distribution spectrale d'intensité de la lumière d'inspection incidente et la distribution spectrale d'intensité de la lumière d'inspection retour dans la bande spectrale d'inspection, notamment au moins dans l'ensemble de sa portion utile. Autrement dit, les deux transformations ne diffèrent pas dans la bande spectrale d'inspection, en tout cas pas dans sa portion utile.

Dans une première catégorie de mode de réalisation, on prévoit que l'interaction de la lumière de reconnaissance incidente avec la marque témoin provoque une transformation modificative, au moins dans la bande spectrale de reconnaissance, entre la distribution spectrale d'intensité de la lumière de reconnaissance incidente et la distribution spectrale d'intensité de la lumière de reconnaissance retour.

Cela permet donc d'assurer que la marque témoin soit détectable par le capteur de reconnaissance lorsqu'elle est illuminée par la lumière de reconnaissance incidente.

En parallèle, on prévoit que l'interaction de la lumière d'inspection incidente avec la marque témoin du récipient provoque une transformation neutre, au moins dans la partie utile de la bande spectrale d'inspection, entre la distribution spectrale de la lumière de reconnaissance incidente et la distribution spectrale de la lumière de reconnaissance retour. Par transformation neutre dans une bande spectrale considérée, on entend qu'elle ne crée pas de transformation modificative de la distribution spectrale d'intensité qui soit détectable dans la bande spectrale considérée. Une telle transformation neutre se trouve par exemple dans le cas d'une transmission à travers un matériau non absorbant ou dit « transparent » dans une bande spectrale considérée. Ainsi, ici, la lumière d'inspection incidente n'est pas modifiée sur l'étendue de la bande spectrale d'inspection, en tous cas au moins dans sa portion utile, par l'interaction avec la marque témoin.

Cela permet donc d'assurer que la marque témoin ne soit pas détectable par le capteur d'inspection lorsqu'elle est illuminée par la lumière d'inspection incidente.

En d'autres termes, la marque témoin n'est détectable que lorsqu'elle est illuminée avec la lumière de reconnaissance incidente, et pas lorsqu'elle est illuminée avec la lumière d'inspection. Pour cela la marque témoin interagit avec la lumière de reconnaissance incidente de manière différente de la manière dont elle interagit avec la lumière d'inspection incidente. Cette différence d'interaction se traduit au moins dans la bande spectrale de reconnaissance, mais pas dans la bande spectrale d'inspection, en tous cas dans sa partie utile. Dans la bande spectrale d'inspection, la marque témoin ne modifie pas la distribution spectrale d'intensité de la lumière d'inspection incidente.

Un premier exemple de réalisation appartenant à cette première catégorie d'exemples de réalisation implique l'utilisation d'une marque témoin comportant un matériau photoluminescent

Un matériau photoluminescent est un matériau qui, sous l'effet d'une illumination dans une bande spectrale d'excitation, émet une lumière de luminescence qui présente un spectre de luminescence.

Dans un tel mode de réalisation on prévoira que le spectre de reconnaissance incident comporte au moins une partie de la bande spectrale d'excitation, de manière que la lumière de reconnaissance excite effectivement le matériau luminescent, tandis que le spectre d'inspection incident est disjoint de la bande spectrale d'excitation de manière que la lumière d'inspection n'excite effectivement pas le matériau luminescent et ne provoque pas le phénomène de luminescence. Dans ce cas, la visibilité ou non de la marque témoin est contrôlée par l'allumage de l'une ou l'autre de la source de lumière de reconnaissance ou de la source de lumière d'inspection.

Ainsi, on retrouve bien la caractéristique énoncée ci-dessus selon lesquelles l'interaction de la lumière de reconnaissance avec la marque témoin provoque une transformation modificative dans la bande spectrale de reconnaissance. L'interaction de la lumière d'inspection avec la marque témoin ne provoque pas cette transformation dans la bande spectrale d'inspection, en tous cas pas dans la partie utile de la bande spectrale d'inspection.

Pour cela, le matériau photoluminescent est de préférence transparent lorsque illuminé avec la lumière d'inspection incidente, dans la bande spectrale utile d'inspection.

Par la photoluminescence de la marque témoin, on obtient une portion de marquage marquée qui possède des propriétés optiques de transformation spectrale qui
- pour le procédé de reconnaissance, diffèrent de celles de la portion de marquage libre dans une portion utile du spectre de reconnaissance incident, en l'occurrence plus précisément dans la bande spectrale d'excitation ;
- pour le procédé d'inspection, sont identiques à celles de la portion de marquage libre dans l'ensemble du spectre d'inspection incident qui ne comprend pas la bande spectrale d'excitation.

Bien entendu, le spectre de luminescence et la bande spectrale de reconnaissance sont choisis pour que le spectre de luminescence soit compris au moins partiellement dans la bande spectrale de reconnaissance pour que la lumière de luminescence émise par la marque témoin soit détectable par le procédé et l'installation de reconnaissance lorsque la marque témoin est illuminée avec la source de lumière de reconnaissance incidente comprenant la bande spectrale d'excitation. Dans ce cas, on peut prévoir aussi bien que le spectre de luminescence soit compris au moins partiellement dans la bande spectrale d'inspection, et qu'au contraire, le spectre de luminescence soit disjoint de la bande spectrale d'inspection.

On peut par exemple choisir un matériau luminescent dont la bande spectrale d'excitation du matériau luminescent présente une longueur d'onde maximale inférieure à 400 nm tandis que le spectre d'inspection incident présente une longueur d'onde minimale supérieure à 400 nm.

Un tel matériau peut donc être excité par une lumière reconnaissance incidente contenant des ultraviolets. En choisissant au contraire une source de lumière d'inspection dont le spectre ne comporte pas d'ultraviolets, ou en tout cas pas de longueurs d'onde dans la bande spectrale d'excitation, par exemple une lumière visible ordinaire (éventuellement filtrée avec un filtre anti-UV), on crée l'interaction différenciée de la marque témoin avec la lumière de reconnaissance incidente, qui rend la marque détectable, par rapport à la lumière d'inspection incidente, qui ne rend pas la marque témoin détectable en ne déclenchant pas la luminescence.

Avantageusement, les matériaux luminescents ont généralement un spectre de luminescence facile à détecter, car présentant, dans la distribution spectrale d'intensité, un pic aisément reconnaissable. Ce spectre de luminescence peut être partiellement ou complètement compris dans le domaine visible. Dans ce cas, un capteur tout à fait classique peut être utilisé en tant que capteur de reconnaissance. On notera que l'on peut éventuellement filtrer la lumière reconnaissance retour pour ne conserver qu'une partie de cette lumière comprenant la partie attendue dans le domaine du spectre de luminescence, et ainsi faciliter la détection de la marque témoin.

Un exemple d'un matériau qu'il est possible d'utiliser pour former une marque témoin dans un procédé selon l'invention est le matériau « Glass'in » ® commercialisé par la société Athéor S.A.S, 104 rue de la Galéra, 34090 Montpellier, France. Un tel matériau, qui se présente sous la forme d'une encre liquide, est particulièrement adapté dans la mesure où il se dépose sur du verre par une technologie d'impression par jet d'encre, et qu'il est susceptible d'être greffé sur le verre de manière particulièrement fiable et solide par un simple traitement aux ultraviolets.

Il est avantageux de prévoir, comme avec le matériau ci-dessus, que le spectre de luminescence soit partiellement ou complètement compris dans le domaine visible. Une marque témoin réalisée avec un tel matériau se révèle ensuite parfaitement détectable, y compris à l'œil nu, lorsqu'elle est exposée à une lumière comportant des ultraviolets, le matériau émettant par exemple une lumière jaune/verte dans le domaine visible, parfaitement détectable par les capteurs conventionnels ou par l'œil humain. A contrario, lorsque ce matériau est illuminé avec une lumière ne comportant pas d'ultraviolets de manière significative, une marque témoin formée à l'aide de ce matériau est indétectable par un capteur conventionnel.

Dans ce mode de réalisation, on comprend donc que la bande spectrale d'inspection et la bande spectrale de reconnaissance peuvent être partiellement ou complètement confondues. En conséquence, on peut utiliser, en tant que capteur de reconnaissance et en tant que capteur d'inspection deux capteurs de même type, par exemple deux capteurs classiques opérant essentiellement dans le domaine visible, voire même un unique capteur commun aux deux installations d'inspection et de reconnaissance.

Si deux capteurs distincts sont utilisés pour l'installation d'inspection et pour l'installation de reconnaissance, ces deux installations pourront être agencées sur la ligne de manière à correspondre à des positions distinctes du récipient. Cette disposition est celle qui est illustrée sur la **Fig.1****.**

Cependant, même dans le cas où deux capteurs distincts sont utilisés, il est possible d'agencer les deux installations d'inspection et de reconnaissance de telle sorte qu'elles observent un récipient donné pour la même position du récipient le long de la trajectoire de convoyage sur la ligne. On notera dans ce cas que, même si un récipient donné est observé pour une même position le long de la trajectoire de convoyage d'une part par l'installation d'inspection et d'autre part par l'installation de reconnaissance, la zone d'inspection et la zone de reconnaissance peuvent être confondues ou être disjointes, notamment si la portion de marquage du récipient est disjointe de la portion inspectée de ce récipient.

Si un unique capteur commun est utilisé pour les installations d'inspection et de reconnaissance, et dans le cas plus général où la bande spectrale d'inspection et la bande spectrale de reconnaissance sont confondues ou au moins partiellement confondues et où l'installation de reconnaissance et l'installation d'inspection sont agencées pour observer un récipient donné pour une même position le long de la trajectoire de convoyage, on prévoira avantageusement que la mise en œuvre du procédé d'inspection et celle du procédé de reconnaissance soient décalées dans le temps. Ce décalage dans le temps peut résulter de l'illumination du récipient de manière alternative par d'une part la lumière d'inspection incidente et d'autre part la lumière de reconnaissance incidente.

Dans le cas de l'utilisation d'un matériau luminescent dont la bande spectrale d'excitation est disjointe du spectre d'inspection incident, on pourra se contenter de veiller à ce que la lumière de reconnaissance incidente soit éteinte lors de la mise en œuvre du procédé d'inspection. En revanche, au moins dans certains cas, il est possible de conserver allumée la lumière d'inspection incidente pendant la mise en œuvre du procédé de reconnaissance.

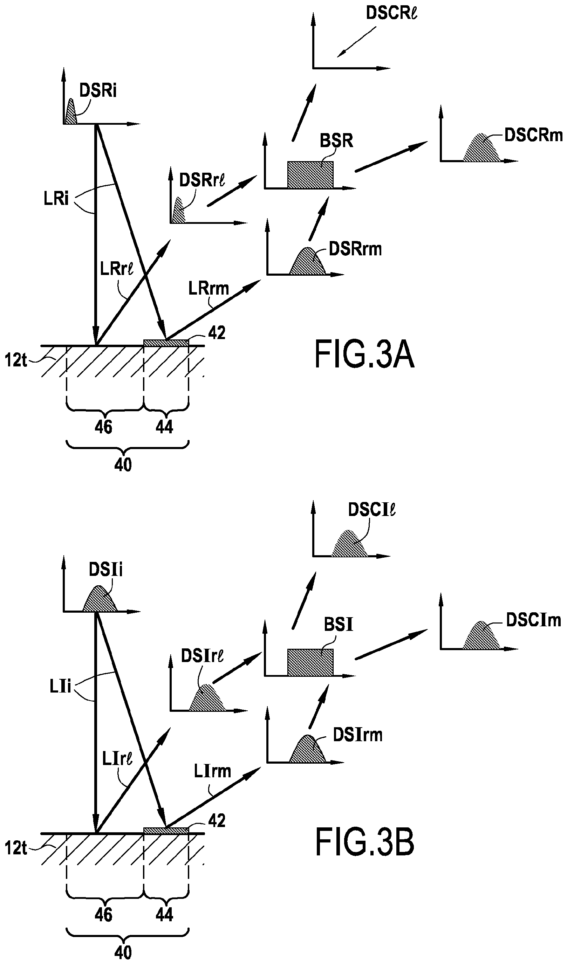

Sur la **Fig.3A****,** on a illustré ce qui se passe lors d'un procédé de reconnaissance, pour un exemple de réalisation impliquant une marque témoin photoluminescente. Une lumière de reconnaissance incidente **LRi,** ayant une distribution spectrale d'intensité **DSRi,** illumine un récipient témoin **12t** pourvu d'une marque témoin **42** sur la portion de marquage **40.** Dans l'exemple, le spectre de reconnaissance de la lumière de reconnaissance incidente **LRi** est dans le domaine UV.

Par interaction avec la portion de marquage libre **46,** donc sans interaction avec la marque témoin **42,** la lumière de reconnaissance incidente **LRi** devient la lumière de reconnaissance retour **LRrl** ayant une distribution spectrale d'intensité **DSRrl** vue par le capteur de reconnaissance. L'interaction avec la portion de marquage libre **46** est par exemple une simple réflexion qui ne modifie pas la distribution spectrale d'intensité. **DSRi** et **DSRrI** sont donc par exemple identiques, résultat d'une transformation neutre.

Par interaction avec la portion de marquage marquée **44,** donc avec la marque témoin **42,** la même lumière de reconnaissance incidente **LRi** devient la lumière de reconnaissance retour **LRrm** ayant une distribution spectrale d'intensité **DSRrm.** Du fait de la présence de la marque **42,** ici de ses propriétés de photoluminescence, la distribution spectrale d'intensité **DSRrm** résulte d'une transformation modificative, par exemple par absorption de la bande spectrale d'excitation et par émission du spectre de luminescence qui se trouve par exemple dans le domaine visible.

On voit que les distributions spectrales d'intensité **DSRrl** et **DSRrm** des lumières de reconnaissance retour résultant de ces deux interactions, respectivement avec la portion de marquage libre et avec la portion de marquage marquée, sont différentes.

Dans l'exemple illustré, on utilise, pour former une image numérique de reconnaissance, un capteur de reconnaissance dont la bande spectrale de reconnaissance **BSR** correspond par exemple au domaine visible.

Pour les pixels images correspondant à la portion de marquage libre **46,** ce capteur ne peut pas convertir la lumière de reconnaissance retour **LRrl,** dans le domaine UV, ce qui se traduit par une distribution spectrale d'intensité **DSCRl** effectivement convertie dans l'image sans aucune longueur d'onde pour ces pixels. Les pixels correspondants sont donc des pixels noirs dans l'image numérique de reconnaissance.

Pour les pixels images correspondant à la portion de marquage marquée **44,** ce capteur peut au contraire convertir une lumière de reconnaissance retour **LRrm,** dans le domaine visible, ce qui se traduit par une distribution spectrale d'intensité **DSCRm** effectivement convertie dans l'image. Les pixels correspondants sont donc des pixels lumineux dans l'image numérique de reconnaissance. Dans cet exemple, la portion utile de la bande spectrale de reconnaissance est donc l'ensemble des longueurs d'ondes pour lesquelles l'intensité n'est pas nulle dans la distribution spectrale d'intensité **DSCRm** effectivement convertie dans l'image.

Les distributions spectrales d'intensité **DSCRl** et **DSCRm** effectivement converties dans l'image, respectivement pour la portion libre et pour la portion de marquage marquée, sont donc différentes. On voit donc qu'il est possible, dans l'image de reconnaissance, de reconnaitre la présence de la marque.

Sur la **Fig.3B****,** on a illustré ce qui se passe lors d'un procédé d'inspection, pour le même exemple de réalisation. Une lumière d'inspection incidente **LIi**, ayant une distribution spectrale d'intensité **DSIi,** illumine le même récipient témoin **12t.** Dans l'exemple, le spectre d'inspection de la lumière d'inspection incidente **LIi** est dans le domaine visible.

Par interaction avec la portion de marquage libre **46,** donc sans interaction avec la marque témoin **42,** la lumière d'inspection incidente **LIi** devient la lumière d'inspection retour **LIrl** ayant une distribution spectrale d'intensité **DSIrl** vue par le capteur d'inspection. L'interaction avec la portion de marquage libre **46** est par exemple une simple réflexion qui ne modifie pas la distribution spectrale d'intensité. **DSIi** et **DSIrl** sont donc par exemple identiques, résultat d'une transformation neutre.

Par interaction avec la portion de marquage marquée **44,** donc avec la marque témoin **42,** la même lumière d'inspection incidente **LIi** devient la lumière d'inspection retour **LIrm** ayant une distribution spectrale d'intensité **DSIrm.** La marque **42,** bien que photoluminescente, est supposée avoir les mêmes propriétés dans le domaine visible que celles du verre sous-jacent formant la portion de marquage, ou bien avoir été déposée en couche très mince ne modifiant par la lumière visible. La luminescence ne se produit pas car le spectre visible **LIi** ne contient pas les longueurs d'onde d'excitation. **DSIi** et **DSIrm** sont donc par exemple identiques, résultat d'une transformation neutre.

Dans ce cas, les distributions spectrales d'intensité **DSIrl** et **DSIrm** des lumières d'inspection retour résultant de ces deux interactions sont identiques.

Dans l'exemple illustré, pour former une image numérique d'inspection, on utilise un capteur d'inspection dont la bande spectrale d'inspection **BSI** correspond au domaine visible.

Autant pour les pixels images correspondant à la portion de marquage libre **46,** que pour les pixels images correspondant à la portion de marquage marquée **44,** ce capteur convertit la lumière d'inspection retour **LIrl** et **LIrm** en des pixels lumineux dans l'image numérique d'inspection. Les distributions spectrales d'intensité **DSCRl** et **DSCRm** effectivement converties dans l'image, respectivement pour la portion de marquage libre et pour la portion de marquage marquée, sont identiques. On voit donc qu'il n'est pas possible, dans l'image d'inspection, de détecter la présence de la marque **42.**

D'autre part, si la portion de marquage **40** contenait un défaut, l'interaction du défaut avec la lumière d'inspection serait identique que le défaut soit situé dans la partie marquée ou dans la partie libre, si bien qu'il serait détectable par le procédé d'inspection, indépendamment de la présence ou absence de la marque témoin.

Dans cet exemple, la portion utile de la bande spectrale d'inspection est donc l'ensemble des longueurs d'ondes pour lesquelles l'intensité n'est pas nulle dans la distribution spectrale d'intensité **DSCIl, DSCIm** effectivement convertie dans l'image, qui est ici limitée par la distribution spectrale d'intensité **DSIi** de la lumière d'inspection incidente **LIi.** La portion utile du spectre d'inspection incident correspond à l'ensemble des longueurs d'ondes de la distribution spectrale d'intensité **DSIi** de la lumière d'inspection incidente **LIi,** puisqu'elles se retrouvent toutes dans la distribution spectrale d'intensité **DSCIl, DSCIm** effectivement convertie dans l'image.

Toujours dans le cadre où le spectre d'inspection incident est différent du spectre de reconnaissance incident, on pourra exploiter cette différence spectrale dans les lumières incidentes en prévoyant que la marque témoin absorbe une bande spectrale témoin qui est comprise dans le spectre de reconnaissance incident de la lumière de reconnaissance incidente mais qui n'est pas comprise dans le spectre d'inspection incident de la lumière d'inspection incidente. Au contraire, la marque témoin sera de préférence « non absorbante » ou d'absorbance quasi nulle, autrement dit transparente dans son interaction avec la lumière d'inspection incidente, dans la bande spectrale d'inspection, en tous cas dans sa portion utile.

Dans ce cas, on prévoira avantageusement que la bande spectrale de reconnaissance comprenne le spectre de reconnaissance retour.

Par exemple, le procédé d'inspection peut utiliser une source d'inspection incidente rouge dont le spectre d'inspection incident s'étend, à titre illustratif, entre 650 et 750 nanomètres. La bande spectrale d'inspection peut par exemple recouvrir l'ensemble du domaine visible allant de 400 à 780 nm, mais elle pourrait être plus étroite. La marque témoin peut comporter un matériau qui absorbe une certaine bande spectrale témoin, par exemple une bande spectrale dans le domaine du bleu, par exemple la bande spectrale témoin allant de 450 à 500 nm, tout en étant de préférence non absorbant en dehors, notamment dans la portion utile de la bande spectrale d'inspection. Dans ces conditions, on choisira une bande spectrale de reconnaissance qui comprend au moins une partie de la bande spectrale témoin, de préférence l'ensemble de la bande spectrale témoin. En l'occurrence, la bande spectrale de reconnaissance peut recouvrir le domaine du bleu allant de 450 à 500 nm. Toutefois, on peut aussi prévoir que la bande spectrale de reconnaissance recouvre l'ensemble du domaine visible. On comprend que, dans ces conditions, un échantillon témoin sera reconnu comme tel par le procédé de reconnaissance car la marque témoin apparaîtra, dans le procédé de reconnaissance, en foncé, voire en noir, et pourra être ainsi détectée, voire reconnue. En revanche, dans le procédé d'inspection, comme la lumière d'inspection incidente ne comporte pas la bande témoin, la présence de cette marque témoin ne sera pas détectable, de sorte que la marque témoin ne gênera pas l'inspection.

On remarque qu'un matériau photoluminescent est généralement un matériau qui absorbe les longueurs d'ondes de sa bande spectrale d'excitation, ce qui peut être mis à profit pour le procédé de reconnaissance dans le cas où la bande spectrale d'excitation recoupe la bande spectrale de reconnaissance, notamment en complément dans la détection du spectre de luminescence. La bande spectrale d'excitation peut alors être considérée comme une bande spectrale témoin absorbée par le matériau photoluminescent.

Dans certains modes de réalisation on peut utiliser une marque déviant uniquement la portion utile de la lumière incidente de reconnaissance, de telle sorte que la déviation empêche que cette portion utile soit vue par le capteur de reconnaissance, au travers du collecteur optique de reconnaissance, mais qu'elle ne dévie pas la lumière d'inspection incidente, dans la portion utile de la bande d'inspection. Un traitement de surface du verre (ou une encre) dichroïque, apte à refléter certaines longueurs d'ondes et transmettre d'autres longueurs d'onde dans le verre permet d'effectuer un tel marquage.

Dans d'autres modes de réalisation, la marque témoin apposée sur la portion de marquage d'un récipient témoin possède des propriétés optiques de transformation spectrale qui confèrent à la portion de marquage marquée des propriétés optiques de transformation spectrale qui :
- pour le procédé de reconnaissance, diffèrent de celles de la portion de marquage libre dans la bande spectrale de reconnaissance, notamment au moins dans sa portion utile ;
- pour le procédé d'inspection, sont identiques à celles de la portion de marquage libre dans la bande spectrale d'inspection, en tous cas dans l'ensemble de sa portion utile.

Ici, en alternative à, ou en complément de l'exploitation d'une différence entre le spectre d'inspection incident et le spectre de reconnaissance incident, on exploite une différence entre la bande spectrale de reconnaissance et la bande spectrale d'inspection.

Dans ce cas, on prévoira avantageusement que la bande spectrale de reconnaissance comprenne une portion utile qui soit distincte, voire de préférence disjointe, de la bande spectrale d'inspection, en tout cas de sa portion utile. En d'autres termes, la bande spectrale de reconnaissance comprend alors au moins une partie de sa portion utile, voire de préférence l'intégralité de sa portion utile, qui n'est pas comprise dans la bande spectrale d'inspection.

La disjonction entre les bandes spectrales d'inspection et de reconnaissance peut être obtenue soit par l'utilisation de capteurs de types différents, ayant des bandes spectrales de sensibilité différentes, et/ou en prévoyant devant l'un ou l'autre des capteurs, ou devant les deux, des filtres bloquant certaines longueurs d'onde de manière à assurer la disjonction.

Par exemple, on pourra s'assurer que l'une des bandes spectrales, d'inspection ou de reconnaissance, s'étende pour l'essentiel dans le domaine de l'infrarouge, tandis que l'autre des deux bandes spectrales pourrait par exemple être limitée au domaine visible et/ou de l'ultraviolet, ou en tout cas exclure le domaine de l'infrarouge.

En d'autres termes, dans de tels modes de réalisation, le procédé de reconnaissance et le procédé d'inspection analysent des parties différentes du spectre optique.

Dans ce cas, on prévoit de préférence que l'interaction de la marque témoin avec la lumière d'inspection incidente ne provoque pas de transformation modificative de la lumière d'inspection incidente dans la bande spectrale d'inspection, en tous cas dans la partie utile de la bande spectrale d'inspection. En d'autres termes, la marque témoin est transparente dans son interaction avec la lumière d'inspection incidente, dans la bande spectrale d'inspection, en tous cas dans la partie utile de la bande spectrale d'inspection.

Dans une variante, on peut choisir un matériau photoluminescent dont le spectre de luminescence soit disjoint de la bande spectrale d'inspection, en tous cas disjoint de la partie utile de la bande spectrale d'inspection.

Selon une autre variante, on peut par exemple prévoir que la marque témoin absorbe une bande spectrale témoin qui est comprise dans la bande spectrale de reconnaissance et qui n'est pas comprise dans la bande spectrale d'inspection, en tous cas pas comprise dans la partie utile de la bande spectrale d'inspection.

Un exemple de réalisation peut consister en la réalisation d'une marque témoin avec un matériau qui absorbe une certaine bande spectrale témoin, par exemple une bande spectrale dans le domaine du bleu, par exemple la bande spectrale témoin allant de 450 à 500 nm, mais transparent en dehors.

Dans ce cas, on prévoira que la bande spectrale de reconnaissance contienne au moins une partie de la bande spectrale témoin. On pourra éventuellement choisir de limiter la bande spectrale de reconnaissance de manière à ce qu'elle contienne la bande spectrale témoin absorbée par la marque témoin, voire soit confondue avec la bande spectrale témoin, mais qu'elle soit par exemple disjointe, ou en tous cas distincte, avec donc une partie disjointe, de la bande spectrale d'inspection. Là encore, si on veut limiter la bande spectrale de reconnaissance, cela peut être réalisé en plaçant, devant un capteur conventionnel utilisé pour le procédé de reconnaissance, un filtre spectral ne laissant passer qu'une partie de la bande optique, par exemple une partie disjointe de la bande spectrale d'inspection. Un tel filtre peut par exemple couper toutes les longueurs d'onde supérieures à 600 nm, voir toutes les longueurs d'onde supérieures à 500 nm. Cela permettra d'augmenter le contraste avec lequel la marque sera vue dans l'image de reconnaissance.

Par le caractère absorbant de la marque témoin, on assure que l'interaction de la lumière de reconnaissance avec la marque témoin provoque bien une transformation modificative dans la bande spectrale de reconnaissance.

Dans ce cas, on peut choisir de réaliser le procédé d'inspection dans une bande spectrale d'inspection disjointe de la bande spectrale témoin bloquée par le matériau de la marque témoin, par exemple un domaine dont la limite inférieure de longueurs d'onde est de 600 nm, voire de 780 nm pour limiter la bande spectrale d'inspection au domaine de l'infrarouge. L'interaction de la lumière d'inspection avec la marque témoin du récipient provoque une transformation neutre, au moins dans la bande spectrale d'inspection, entre la distribution spectrale de la lumière d'inspection incidente et la distribution spectrale de la lumière d'inspection retour. Cette transformation neutre signifie que la distribution spectrale d'intensité n'est pas modifiée entre la lumière d'inspection incidente et la lumière d'inspection retour, au moins dans la bande spectrale d'inspection. La lumière d'inspection incidente est donc de préférence choisie pour que son interaction avec le matériau de la portion de marquage libre du récipient résulte en une lumière d'inspection retour qui soit majoritairement comprise dans la bande spectrale d'inspection. Par exemple, si la bande spectrale d'inspection est limitée au domaine de l'infrarouge, on pourra prévoir d'utiliser une source de lumière incidente d'inspection dans le domaine infrarouge.

On notera que pour le procédé d'inspection, il est possible d'utiliser une lumière d'inspection incidente qui comprend la bande spectrale témoin, mais on utilisera de préférence une lumière d'inspection incidente qui ne comprend pas la bande spectrale témoin.

Pour le procédé de reconnaissance, on peut alors prévoir d'éclairer le récipient avec une lumière de reconnaissance incidente comportant une composante dans la bande spectrale témoin absorbée par le matériau de la marque témoin. De préférence, la majeure partie de l'intensité lumineuse de la lumière de reconnaissance sera située dans la bande spectrale témoin absorbée par le matériau de la marque témoin. Ainsi, en l'absence de la marque témoin, on détectera dans le procédé de reconnaissance une luminosité importante dans la portion de marquage libre du récipient. En présence de la marque témoin, le procédé de reconnaissance ne verra qu'une luminosité faible voire pas de luminosité pour la portion de marquage marquée. Ainsi, la marque témoin apparaîtra sombre, voire noire, donc avec un fort contraste, et il sera possible de la reconnaître facilement dans une étape d'analyse mettant en œuvre un processus de traitement d'images bien connu de l'homme du métier.

On expose maintenant un autre exemple où la bande spectrale de reconnaissance et la bande spectrale d'inspection ne sont pas confondues, plus particulièrement où la bande spectrale de reconnaissance comprend une portion qui n'est pas comprise dans la bande spectrale d'inspection, et où la présence de la marque témoin n'est détectable, sous l'effet de la lumière reconnaissance, que dans une partie du spectre optique qui est comprise dans la bande spectrale de reconnaissance, mais pas dans la bande spectrale d'inspection.

Pour cela, on prévoit par exemple que la marque témoin absorbe une bande spectrale témoin qui est comprise dans la bande spectrale de détection et qui n'est pas comprise dans la bande spectrale d'inspection. Comme dans un exemple précédent, la marque témoin peut comporter un matériau qui absorbe une bande spectrale témoin dans le domaine du bleu allant de 450 à 500 nm. Pour faciliter la compréhension, on se place dans l'exemple d'un procédé de reconnaissance et d'un procédé d'inspection par réflexion.

Par exemple, le procédé d'inspection utilise une source d'inspection incidente rouge dont le spectre d'inspection incident s'étend, à titre illustratif, entre 650 et 750 nanomètres dans un spectre où la marque témoin est transparente et incolore. Cependant, la source d'inspection incidente peut aussi comporter une lumière dont le spectre s'étend sur l'ensemble du domaine visible. Dans ce cas, la bande spectrale d'inspection peut être limitée par exemple à une bande rouge comprise par exemple entre 650 et 750 mètres. Dans ces conditions, on choisira une bande spectrale de reconnaissance qui comprend au moins une partie de la bande spectrale témoin, de préférence l'ensemble de la bande spectrale témoin. En l'occurrence, la bande spectrale de reconnaissance peut recouvrir le domaine du bleu allant de 450 à 500 nm. Toutefois, on peut aussi prévoir que la bande spectrale de reconnaissance recouvre l'ensemble du domaine visible. Dans ce dernier cas, on remarque qu'elle recoupe la bande spectrale d'inspection, voire même qu'elle la contient entièrement.

De même, le spectre de reconnaissance incident doit comporter au moins la bande spectrale témoin mais il peut être plus étendu et peut par exemple couvrir l'ensemble du domaine visible, par exemple une lumière blanche. On comprend que, dans ces conditions, un échantillon témoin sera reconnu comme tel par le procédé de reconnaissance car la marque témoin apparaîtra dans le procédé de reconnaissance. La marque témoin apparaîtra d'autant mieux que la bande spectrale de reconnaissance sera limitée. Il est ainsi avantageux de limiter la bande spectrale de reconnaissance à la bande spectrale témoin. En revanche, dans le procédé d'inspection, comme la bande spectrale d'inspection ne comporte pas la bande témoin, le procédé d'inspection ne distinguera pas entre la présence de la marque et l'absence de la marque. De la sorte, la présence de cette marque témoin ne sera pas visible, de sorte que la marque témoin ne gênera pas l'inspection.

On remarque que dans ce cas, on peut utiliser, en tant que source de lumière d'inspection et source de lumière de reconnaissance, des sources ayant le même spectre, éventuellement en utilisant une seule et unique source.

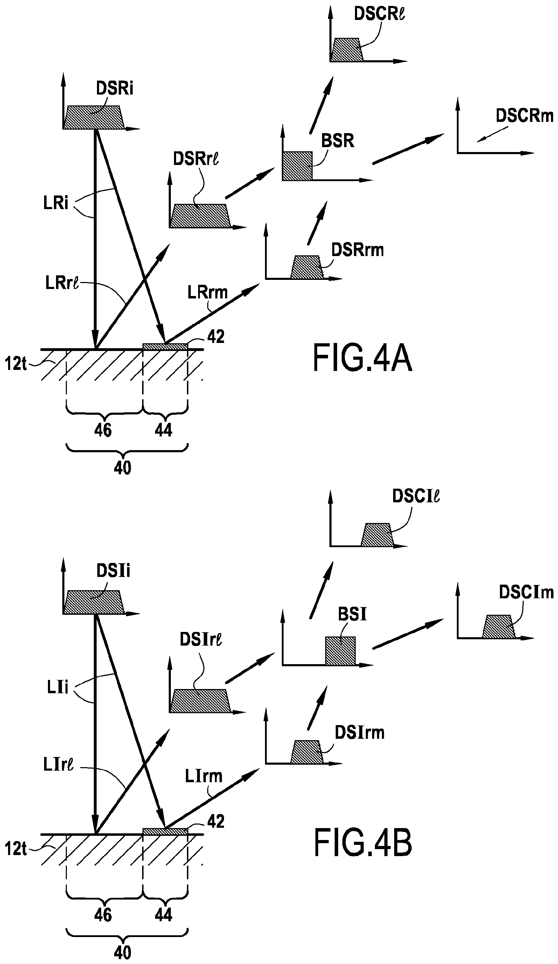

Sur la **Fig. 4A****,** on a illustré ce qui se passe lors d'un procédé de reconnaissance, pour un exemple de réalisation impliquant une marque témoin absorbant au moins une partie du spectre de reconnaissance incident, par exemple un bande spectrale témoin correspondant à la partie bleue du domaine visible. Une lumière de reconnaissance incidente **LRi,** ayant une distribution spectrale d'intensité **DSRi**, illumine un récipient témoin **12t** pourvu d'une marque témoin **42** sur la portion de marquage **40.** Dans l'exemple, le spectre de reconnaissance incident de la lumière de reconnaissance incidente **LRi** s'étend sur tout le domaine visible. Il s'agit par exemple d'une lumière blanche.

Par interaction avec la portion de marquage libre **46,** donc sans interaction avec la marque témoin **42,** la lumière de reconnaissance incidente **LRi** devient la lumière de reconnaissance retour **LRrl** vue par le capteur de reconnaissance et ayant une distribution spectrale d'intensité **DSRrl.** L'interaction avec la portion de marquage libre **46** est par exemple une simple réflexion qui ne modifie pas la distribution spectrale d'intensité. **DSRi** et **DSRrl** sont donc par exemple identiques, résultat d'une transformation neutre, mais pas nécessairement.

Par interaction avec la portion de marquage marquée **44,** donc avec la marque témoin **42,** la même lumière de reconnaissance incidente **LRi** devient la lumière de reconnaissance retour **LRrm** ayant une distribution spectrale d'intensité **DSRrm.** Du fait de la présence de la marque **42,** ici de ses propriétés d'absorption, la distribution spectrale d'intensité **DSRrm** est le résultat d'une transformation modificative, par exemple par absorption de la bande spectrale témoin. On illustre ici le cas d'une marque absorbant la partie bleue du domaine visible.

On voit que les distributions spectrales d'intensité **DSRrl** et **DSRrm** des lumières de reconnaissance retour résultant de ces deux interactions, respectivement avec la portion de marquage libre et avec la portion de marquage marquée, sont différentes dans la partie bleue du spectre et identiques dans sa partie rouge.

Dans l'exemple illustré, on utilise, pour former une image numérique de reconnaissance, un capteur de reconnaissance dont la bande spectrale de reconnaissance **BSR** correspond à la partie bleue domaine visible. On peut réaliser cela en filtrant les autres parties du domaine visible.

Pour les pixels images correspondant à la portion de marquage libre **46,** ce capteur ne peut convertir que la partie de la lumière de reconnaissance retour **LRrl,** située dans la partie bleue du domaine visible, ce qui se traduit par une distribution spectrale d'intensité **DSCRl** effectivement convertie dans l'image ayant une luminosité dans le bleu. Les pixels correspondants sont donc des pixels lumineux dans l'image numérique de reconnaissance.

Pour les pixels images correspondant à la portion de marquage marquée **44,** ce capteur ne peut au contraire pas convertir la lumière de reconnaissance retour **LRrm,** puisque celle-ci ne comporte pas de longueurs d'onde dans la partie bleue du domaine visible, ce qui se traduit par une distribution spectrale d'intensité **DSCRm** effectivement convertie dans l'image sans longueurs d'onde d'intensité non nulle. Les pixels correspondants sont donc des pixels noirs dans l'image numérique de reconnaissance.

Dans cet exemple, la portion utile de la bande spectrale de reconnaissance est donc l'intégralité de la bande spectrale de reconnaissance. En revanche, la partie utile du spectre de reconnaissance incident est limitée à la partie de ce spectre qui est effectivement convertie par le capteur, donc limitée à la bande spectrale de reconnaissance puisque, dans cet exemple, cette dernière est entièrement comprise dans le spectre de reconnaissance incident.

Les distributions spectrales d'intensité **DSCRl** et **DSCRm** effectivement converties dans l'image, respectivement pour la portion libre et pour la portion de marquage marquée, sont donc différentes. On voit donc qu'il est possible, dans l'image de reconnaissance, de détecter la présence de la marque, voire de reconnaitre la marque, laquelle apparait ici en noir sur fond lumineux.

Sur la **Fig. 4B****,** on a illustré ce qui se passe lors d'un procédé d'inspection, pour le même exemple de réalisation. Une lumière d'inspection incidente **LIi,** ayant une distribution spectrale d'intensité **DSIi,** illumine le même récipient témoin **12t.** Dans l'exemple, le spectre d'inspection de la lumière d'inspection incidente **LIi** est le même que celui de la lumière de reconnaissance incidente **LRi**.

Par interaction avec la portion de marquage libre **46,** donc sans interaction avec la marque témoin **42,** la lumière d'inspection incidente **LIi** devient la lumière d'inspection retour **LIrl** ayant une distribution spectrale d'intensité **DSIrl** vue par le capteur d'inspection. L'interaction avec la portion de marquage libre **46** est par exemple une simple réflexion qui ne modifie pas la distribution spectrale d'intensité. Les distributions spectrales d'intensité **DSIi** et **DSIrl** sont donc par exemple identiques, résultat d'une transformation neutre. La transformation pourrait être modificative.

Par interaction avec la portion de marquage marquée **44,** donc avec la marque témoin **42,** la même lumière d'inspection incidente **LIi** devient la lumière d'inspection retour **LIrm** ayant une distribution spectrale d'intensité **DSIrm.** La marque **42,** ayant absorbé la partie bleue du domaine visible, a en revanche les mêmes propriétés dans le reste du domaine visible, notamment dans le domaine du rouge, que celles du verre sous-jacent formant la portion de marquage. Les distributions spectrales d'intensité **DSIi** et **DSIrm** sont donc par exemple identiques dans le domaine du rouge, tout en étant différentes dans le domaine du bleu.

Dans ce cas, les distributions spectrales d'intensité **DSIrl** et **DSIrm** des lumières d'inspection retour résultant de ces deux interactions sont différentes dans le domaine du bleu, tout en étant par exemple identiques dans le domaine du rouge, ou étant le résultat d'une transformation modificative identique dans la bande spectrale d'inspection, ici dans le domaine du rouge.

Dans l'exemple illustré, pour former une image numérique de d'inspection, on utilise un capteur d'inspection dont la bande spectrale d'inspection **BSI** correspond est par exemple limitée à la partie rouge du domaine visible.

Autant pour les pixels images correspondant à la portion de marquage libre **46,** que pour les pixels images correspondant à la portion de marquage marquée **44,** ce capteur convertit les lumières d'inspection retour correspondantes **LIrl** et **LIrm** en des pixels lumineux dans l'image numérique d'inspection. Dans la mesure où ces deux lumières d'inspection retour ont, dans la bande spectrale d'inspection, en tout cas dans sa partie utile, la même distribution spectrale d'intensité, les distributions spectrales d'intensité **DSCIl** et **DSCIm** effectivement converties dans l'image, respectivement pour la portion de marquage libre et pour la portion de marquage marquée, sont identiques. On voit donc qu'il n'est pas possible, dans l'image d'inspection, de détecter la présence de la marque **42,** cela en dépit du fait que les lumières d'inspection retour résultant de ces deux interactions sont différentes dans le domaine du bleu. En effet, la partie du spectre dans laquelle elles diffèrent est en dehors de la bande spectrale d'inspection, si bien que la différence n'est pas visible dans l'image numérique d'inspection.

Dans cet exemple, la portion utile de la bande spectrale d'inspection correspond à l'intégralité de la bande spectrale d'inspection. On voit notamment que la bande spectrale d'inspection est entièrement comprise dans le spectre d'inspection incident. En revanche, la portion utile du spectre d'inspection incident est limitée à l'ensemble des longueurs d'ondes de la bande spectrale d'incidence, puisque les autres longueurs d'onde du spectre d'inspection incident ne sont pas converties par le capteur d'inspection.

Comme évoqué pour certains exemples ci-dessus, lorsque la bande spectrale de reconnaissance comprend une portion qui n'est pas comprise dans la bande spectrale d'inspection, on peut réaliser l'invention avec une marque témoin comportant un matériau photoluminescent dont le spectre de luminescence est compris dans la bande spectrale de reconnaissance mais pas dans la bande spectrale d'inspection.

Comme cela ressort des exemples ci-dessus, on peut avantageusement prévoir d'exploiter à la fois une différence entre le spectre d'inspection incident et le spectre de reconnaissance incident et une différence entre la bande spectrale de reconnaissance et la bande spectrale d'inspection. Dans ce cas, la marque témoin, apposée sur la portion de marquage d'un récipient témoin, possède des propriétés optiques de transformation spectrale qui confèrent à la portion de marquage marquée des propriétés optiques de transformation spectrale, qui
- pour le procédé de reconnaissance, diffèrent de celles de la portion de marquage libre dans une portion utile du spectre de reconnaissance incident et de la bande spectrale de reconnaissance ;
- pour le procédé d'inspection, sont identiques à celles de la portion de marquage libre dans une portion utile du spectre d'inspection incident et de la bande spectrale d'inspection.

Dans de nombreux cas, on prévoit que le capteur photoélectrique d'inspection et le capteur photoélectrique de détection sont des capteurs distincts, y compris dans des cas où les bandes spectrales d'inspection peuvent être confondues.

Dans certains cas, par exemple si les procédés de reconnaissance et d'inspection sont mis en oeuvre pour une même position d'un récipient donné sur une trajectoire de convoyage, et plus particulièrement dans les cas où les zones d'inspection et de reconnaissance sont confondues, on pourra prévoir que les sources de lumière de reconnaissance et d'inspection sont allumées alternativement. Cela permet de séparer temporellement le procédé d'inspection et le procédé de reconnaissance. Dans ce cas, ils peuvent être mis en œuvre en utilisant un même capteur photoélectrique pour l'inspection et la reconnaissance.

Dans certains modes de réalisation, le spectre de reconnaissance retour est disjoint de la bande spectrale d'inspection. Alors les procédés de reconnaissance et d'inspection peuvent être mis en œuvre simultanément en prévoyant qu'ils soient en œuvre pour une même position d'un récipient donné sur une trajectoire de convoyage.

Lorsque la marque n'est pas visible par l'œil humain sous l'éclairage ambiant de la ligne, mais devient visible à l'œil humain sous l'effet d'une lumière incidente particulière, par exemple lorsque la marque est une encre photoluminescente émettant de la lumière visible sous excitation par des rayons UV, il peut être avantageusement prévu une zone de circulation sur la ligne, éclairée par ladite lumière incidente particulière, afin qu'un opérateur puisse récupérer des récipients témoins qui seraient en circulation sur la ligne, par exemple suite à une erreur humaine ou à un défaut de fonctionnement d'une installation d'inspection ou d'éjection.

L'invention n'est pas limitée aux exemples décrits et représentés car diverses modifications peuvent y être apportées sans sortir de son cadre défini par les revendications.

## Revendications

1. Méthode de vérification d'un procédé d'inspection optique de récipients en verre **(12),** dans lequel le procédé d'inspection optique d'un récipient comporte les étapes consistant à :
- illuminer au moins une portion inspectée du récipient avec une lumière d'inspection incidente **(LIi)** ayant un spectre d'inspection incident ;
- recueillir une lumière d'inspection retour **(LIrl, LIrl)** résultant de l'interaction de la lumière d'inspection incidente **(LIi)** avec la portion inspectée du récipient, la lumière d'inspection retour ayant un spectre d'inspection retour ;
- convertir, dans une bande spectrale d'inspection **(BSI),** la lumière d'inspection retour **(LIrl, LIrl)** recueillie en une image numérique d'inspection multipoints linéaire ou bidimensionnelle **(II)** ;
- analyser l'image numérique d'inspection **(II)** pour déterminer un résultat d'inspection du récipient inspecté **(12),**
dans laquelle la méthode de vérification comporte les étapes consistant à :
- inspecter, conformément au procédé d'inspection optique, un récipient témoin **(12t)** comportant une marque témoin **(42)** apposée sur une portion de marquage du récipient témoin **(40)** ;
- comparer un résultat d'inspection du récipient témoin **(12t)** déterminé par le procédé d'inspection optique à un résultat d'inspection **(12t)** connu du récipient témoin ;
dans laquelle :
- la méthode de vérification comporte un procédé de reconnaissance optique d'un récipient témoin par lecture optique d'une marque témoin **(42)** dans une portion de marquage marquée **(44)** du récipient témoin **(12t),** comportant les étapes consistant à :
∘ illuminer au moins la portion de marquage **(40)** du récipient avec une lumière de reconnaissance incidente **(LRi)** ayant un spectre de reconnaissance incident ;
∘ recueillir une lumière de reconnaissance retour **(LRr)** résultant de l'interaction de la lumière de reconnaissance incidente avec la portion de marquage **(40)** et une marque témoin éventuelle, la lumière de reconnaissance retour **(LRr)** ayant un spectre de reconnaissance retour;
dans laquelle la marque témoin (42), apposée sur la portion de marquage d'un récipient témoin, possède des propriétés optiques de transformation spectrale telles que :
- la transformation de la distribution spectrale d'intensité entre la lumière de reconnaissance incidente (LRi) et la lumière de reconnaissance retour (LRr), provoquée par interaction avec la portion de marquage marquée (44), est différente, à l'intérieur au moins de la bande spectrale de reconnaissance (BSR), d'une transformation de la distribution spectrale d'intensité entre la lumière de reconnaissance incidente et la lumière de reconnaissance retour, provoquée par interaction avec une portion de marquage libre de marque (46) ;
**caractérisée en ce que**:
- le procédé de la méthode de vérification comporte en outre les étapes consistant à :
∘ convertir, dans une bande spectrale de reconnaissance **(BSR),** la lumière de reconnaissance retour recueillie en une image numérique de reconnaissance multipoints linéaire ou bidimensionnelle (IR);
∘ analyser informatiquement l'image numérique de reconnaissance (IR) pour y reconnaître la marque témoin **(42)** éventuelle ;
et **en ce que** la marque témoin **(42),** apposée sur la portion de marquage d'un récipient témoin, possède des propriétés optiques de transformation spectrale telles que :
- la transformation de la distribution spectrale d'intensité entre la lumière d'inspection incidente **(LIi)** et la lumière d'inspection retour **(LIr),** provoquée par interaction avec la portion de marquage marquée, n'est pas différente, à l'intérieur au moins d'une portion utile de la bande spectrale d'inspection **(BSI),** de la transformation de la distribution spectrale d'intensité entre la lumière d'inspection incidente et la lumière d'inspection retour par interaction avec une portion de marquage libre de marque **(46).**

2. Méthode de vérification selon la revendication 1, **caractérisée en ce que** la marque témoin **(42)** comporte un matériau photoluminescent qui, sous l'effet d'une illumination dans une bande spectrale d'excitation, émet une lumière de luminescence qui présente un spectre de luminescence, et **en ce que** le spectre de reconnaissance incident comporte au moins une partie de la bande spectrale d'excitation tandis que le spectre d'inspection incident est disjoint de la bande spectrale d'excitation.

3. Méthode de vérification selon l'une quelconque des revendications précédentes, **caractérisée en ce que** la marque témoin **(42)** comporte un matériau photoluminescent qui, sous l'effet d'une illumination dans une bande spectrale d'excitation, émet une lumière de luminescence qui présente un spectre de luminescence, et **en ce que** le spectre de luminescence est compris dans la bande spectrale de reconnaissance **(BSR)** et disjoint de la bande spectrale d'inspection **(BSI).**

4. Méthode de vérification selon l'une quelconque des revendications précédentes, **caractérisée en ce que** la bande spectrale d'inspection **(BSI)** et la bande spectrale de reconnaissance **(BSR)** sont disjointes, et **en ce que** le spectre d'inspection retour et le spectre de reconnaissance retour sont disjoints.

5. Méthode de vérification selon l'une quelconque des revendications précédentes, **caractérisée en ce que** le spectre d'inspection incident et le spectre de reconnaissance incident sont disjoints.

6. Méthode de vérification selon l'une des revendications précédentes, **caractérisée en ce que** la marque témoin **(42)** absorbe une bande spectrale témoin qui est comprise dans la bande spectrale de reconnaissance **(BSR)** et qui n'est pas comprise dans la bande spectrale d'inspection **(BSI)** ou qui est comprise dans la lumière de reconnaissance incidente **(LRi)** et qui n'est pas comprise dans la lumière d'inspection incidente **(LIi).**

7. Méthode de vérification selon l'une quelconque des revendications précédentes, **caractérisée en ce que** le procédé de reconnaissance identifie le récipient témoin **(12t)** comme appartenant à une catégorie déterminée de récipients témoins parmi plusieurs catégories distinctes de récipient témoins.

8. Méthode de vérification selon l'une quelconque des revendications précédentes, **caractérisée en ce que** le procédé de reconnaissance identifie le récipient témoin **(12t)** de manière unique.

9. Méthode de vérification selon l'une quelconque des revendications précédentes, **caractérisée en ce qu'**elle comporte l'étape d'insérer au moins un récipient témoin **(12t)** ayant un résultat d'inspection attendu dans une série de récipients à inspecter **(12)** et à vérifier que le procédé d'inspection détermine le résultat d'inspection attendu pour ledit récipient témoin **(12t).**

10. Système de vérification d'une installation d'inspection optique **(16a, 16b)** de récipients en verre, dans lequel l'installation d'inspection **(16a, 16b)** d'un récipient comporte :
- une source **(24a, 24b)** de lumière d'inspection incidente **(LIi)** illuminant une zone d'inspection **(18a, 18b)** de l'installation et ayant un spectre d'inspection incident ;
- un collecteur optique **(26a, 26b)** recueillant une lumière d'inspection retour **(LIr)** résultant de l'interaction de la lumière d'inspection incidente **(LIi)** avec une portion inspectée d'un récipient **(12)** placé dans la zone d'inspection, la lumière d'inspection retour ayant un spectre d'inspection retour ;
- un capteur photoélectrique d'inspection **(28a, 28b)** convertissant, dans une bande spectrale d'inspection **(BSI),** la lumière d'inspection retour **(LIr)** recueillie en une image numérique d'inspection multipoints linéaire ou bidimensionnelle **(II)** ;
- une unité informatique **(30)** d'analyse de l'image numérique d'inspection configurée pour déterminer un résultat d'inspection du récipient inspecté,
dans lequel le système de vérification comporte :
- au moins un récipient témoin **(12t)** comportant une marque témoin **(42)** apposée sur une portion de marquage **(40)** du récipient témoin **(12t),** le récipient étant adapté pour être positionné dans la zone d'inspection de l'installation d'inspection optique, et ;
- une unité de traitement informatique **(30, 30a, 30b)** configurée pour comparer un résultat d'inspection d'un récipient témoin **(12t),** tel que déterminé par l'installation d'inspection optique **(16a, 16b),** à un résultat d'inspection attendu du récipient témoin **(12t)** ;
- une installation de reconnaissance optique **(32)** d'un récipient témoin **(12t)** par reconnaissance optique d'une marque témoin **(42)** dans une portion de marquage **(40)** du récipient témoin **(12t),** comportant :
∘ une source **(34)** de lumière de reconnaissance incidente **(LRi)** illuminant une zone de reconnaissance **(35)** de l'installation et ayant un spectre de reconnaissance incident ;
∘ un collecteur optique **(36)** recueillant, en présence d'un récipient témoin dans la zone de reconnaissance, une lumière de reconnaissance retour **(LRr)** résultant de l'interaction de la lumière de reconnaissance incidente **(LRi)** avec la portion de marquage **(40)** et avec une marque témoin **(42)** éventuelle, la lumière de reconnaissance retour **(LRr)** ayant un spectre de reconnaissance retour;
dans lequel la marque témoin (42), apposée sur la portion de marquage (40) d'un récipient témoin (12t), possède des propriétés optiques de transformation spectrale qui confèrent à la portion de marquage marquée (44) des propriétés optiques de transformation spectrale qui diffèrent de celles de la portion de marquage libre de marque (46) dans une portion utile du spectre de reconnaissance incident et/ou de la bande spectrale de reconnaissance,
**caractérisé en ce que** l'installation comporte, en outre,
∘ un capteur photoélectrique de reconnaissance **(38)** convertissant, dans une bande spectrale de reconnaissance **(BSR),** la lumière de reconnaissance retour **(LRr)** recueillie en une image numérique de reconnaissance multipoints linéaire ou bidimensionnelle (IR) ;
∘ une unité informatique **(30)** d'analyse de l'image numérique de reconnaissance (IR) pour détecter la marque témoin **(42)** éventuelle ; et **en ce que** la marque témoin **(42),** apposée sur la portion de marquage **(40)** d'un récipient témoin **(12t),** possède des propriétés optiques de transformation spectrale qui confèrent à la portion de marquage marquée **(44)** des propriétés optiques de transformation spectrale qui sont identiques à celles de la portion de marquage libre de marque **(46)** dans au moins l'ensemble d'une portion utile du spectre d'inspection incident et de la bande spectrale d'inspection **(BSI).**

11. Système de vérification selon la revendication **10, caractérisé en ce que** les sources de lumière de reconnaissance et d'inspection **(34, 24a, 24b)** sont allumées alternativement.

12. Système de vérification selon l'une quelconque des revendications **10** ou **11, caractérisé en ce que** la marque témoin **(42)** comporte un matériau photoluminescent qui, sous l'effet d'une illumination dans une bande spectrale d'excitation, émet une lumière de luminescence qui présente un spectre de luminescence, et **en ce que** le spectre de reconnaissance incident comporte au moins une partie de la bande spectrale d'excitation tandis que le spectre d'inspection incident est disjoint de la bande spectrale d'excitation.

13. Système de vérification selon l'une quelconque des revendications **10** à **12, caractérisé en ce que** la marque témoin **(42)** comporte un matériau photoluminescent qui, sous l'effet d'une illumination dans une bande spectrale d'excitation, émet une lumière de luminescence qui présente un spectre de luminescence, et **en ce que** le spectre de luminescence est compris dans la bande spectrale de reconnaissance **(BSR)** et disjoint de la bande spectrale d'inspection **(BSI).**

14. Système de vérification selon l'une quelconque des revendications **10** à **13, caractérisée en ce que** la bande spectrale d'inspection **(BSI)** et la bande spectrale de reconnaissance **(BSR)** sont disjointes ou **en ce que** le spectre d'inspection retour et le spectre de reconnaissance retour sont disjoints.

15. Système de vérification selon l'une quelconque des revendications **10** à **14, caractérisée en ce que** le spectre d'inspection incident et le spectre de reconnaissance incident sont disjoints.

16. Système de vérification selon l'une quelconque des revendications **10** à **15, caractérisé en ce que** la marque témoin **(42)** absorbe une bande spectrale témoin qui est comprise dans la bande spectrale de reconnaissance **(BSR)** et qui n'est pas comprise dans la bande spectrale d'inspection **(BSI),** ou qui est comprise dans la lumière de reconnaissance incidente **(LRi)** et qui n'est pas comprise dans la lumière d'inspection incidente **(LRr).**

## Patentansprüche

1. Verfahren zur Prüfung eines optischen Inspektionsverfahrens von Glasbehältern (12), wobei das optische Inspektionsverfahren eines Behälters die Schritte aufweist, die darin bestehen:
- mindestens einen inspizierten Abschnitt eines inspizierten Behälters mit einfallendem Inspektionslicht (LIi), das ein einfallendes Inspektionsspektrum aufweist, zu beleuchten,
- zurückkommendes Inspektionslicht (LIrl, LIrl) zu erfassen, das aus der Wechselwirkung des einfallenden Inspektionslichts (LIi) mit dem inspizierten Abschnitt des Behälters resultiert, wobei das zurückkommende Inspektionslicht ein zurückkommendes Inspektionsspektrum aufweist,
- das erfasste zurückkommende Inspektionslicht (LIrl, LIrl) in einem Inspektionsspektralband (BSI) in ein lineares oder zweidimensionales digitales Mehrpunkt-Inspektionsbild (II) umzuwandeln,
- das digitale Inspektionsbild (II) zu analysieren, um ein Inspektionsergebnis des inspizierten Behälters (12) zu bestimmen,
wobei das Prüfungsverfahren die Schritte aufweist, die darin bestehen:
- gemäß dem optischen Inspektionsverfahren einen Kontrollbehälter (12t), der eine Kontrollmarke (42) aufweist, die an einem Markierungsabschnitt des Kontrollbehälters (40) angebracht ist, zu inspizieren,
- ein Inspektionsergebnis des Kontrollbehälters (12t), das durch das optische Inspektionsverfahren bestimmt wird, mit einem bekannten Inspektionsergebnis (12t) des Kontrollbehälters zu vergleichen,
wobei:
- das Prüfungsverfahren einen Prozess zur optischen Erkennung eines Kontrollbehälters durch optisches Ablesen einer Kontrollmarke (42) in einem markierten Markierungsabschnitt (44) des Kontrollbehälters (12t) aufweist, der die Schritte aufweist, die darin bestehen:
∘ zumindest den Markierungsabschnitt (40) des Behälters mit einfallendem Erkennungslicht (LRi), das ein einfallendes Erkennungsspektrum aufweist, zu beleuchten,
∘ zurückkommendes Erkennungslicht (LRr) zu erfassen, das aus der Wechselwirkung des einfallenden Erkennungslichts mit dem Markierungsabschnitt (40) und einer eventuellen Kontrollmarke resultiert, wobei das zurückkommende Erkennungslicht (LRr) ein zurückkommendes Erkennungsspektrum aufweist,
wobei die Kontrollmarke (42), die an dem Markierungsabschnitt eines Kontrollbehälters angebracht ist, optische Eigenschaften der Spektraltransformation aufweist, wie:
- die Transformation der spektralen Intensitätsverteilung zwischen dem einfallenden Erkennungslicht (LRi) und dem zurückkommenden Erkennungslicht (LRr), die durch Wechselwirkung mit dem markierten Markierungsabschnitt (44) bewirkt wird, ist zumindest im Inneren des Erkennungsspektralbandes (BSR) von einer Transformation der spektralen Intensitätsverteilung zwischen dem einfallenden Erkennungslicht und dem zurückkommenden Erkennungslicht verschieden, die durch Wechselwirkung mit einem Markierungsabschnitt ohne Marke (46) bewirkt wird,
**dadurch gekennzeichnet, dass**:
- der Prozess des Prüfungsverfahrens ferner die Schritte aufweist, die darin bestehen:
∘ das erfasste zurückkommende Erkennungslicht in einem Erkennungsspektralband (BSR) in ein lineares oder zweidimensionales digitales Mehrpunkt-Erkennungssbild (IR) umzuwandeln,
∘ das digitale Erkennungsbild (IR) rechnerisch zu analysieren, um darin die eventuelle Kontrollmarke (42) zu erkennen,
und dadurch, dass die Kontrollmarke (42), die an dem Markierungsabschnitt eines Kontrollbehälters angebracht ist, optische Eigenschaften der Spektraltransformation aufweist, wie:
- die Transformation der spektralen Intensitätsverteilung zwischen dem einfallenden Inspektionslicht (Lli) und dem zurückkommenden Inspektionslicht (LIr), die durch Wechselwirkung mit dem markierten Markierungsabschnitt bewirkt wird, ist im Inneren von mindestens einem Nutzabschnitt des Inspektionsspektralbands (BSI) von der Transformation der spektralen Intensitätsverteilung zwischen dem einfallenden Inspektionslicht und dem zurückkommenden Inspektionslicht durch Wechselwirkung mit einem Markierungsabschnitt ohne Marke (46) nicht verschieden.

2. Prüfungsverfahren nach Anspruch 1, **dadurch gekennzeichnet, dass** die Kontrollmarke (42) ein photolumineszentes Material aufweist, das unter der Wirkung einer Beleuchtung in einem Anregungsspektralband Lumineszenzlicht emittiert, das ein Lumineszenzspektrum aufweist, und dadurch, dass das einfallende Erkennungsspektrum zumindest einen Teil des Anregungsspektralbands aufweist, während das einfallende Inspektionsspektrum von dem Anregungsspektralband getrennt ist.

3. Prüfungsverfahren nach einem der vorhergehenden Ansprüche, **dadurch gekennzeichnet, dass** die Kontrollmarke (42) ein photolumineszentes Material aufweist, das unter der Wirkung einer Beleuchtung in einem Anregungsspektralband ein Lumineszenzlicht emittiert, das ein Lumineszenzspektrum aufweist, und dadurch, dass das Lumineszenzspektrum in dem Erkennungsspektralband (BSR) liegt und von dem Inspektionsspektralband (BSI) getrennt ist.

4. Prüfungsverfahren nach einem der vorhergehenden Ansprüche, **dadurch gekennzeichnet, dass** das Inspektionsspektralband (BSI) und das Erkennungsspektralband (BSR) getrennt sind, und dadurch, dass das zurückkommende Inspektionsspektrum und das zurückkommende Erkennungsspektrum getrennt sind.

5. Prüfungsverfahren nach einem der vorhergehenden Ansprüche, **dadurch gekennzeichnet, dass** das einfallende Inspektionsspektrum und das einfallende Erkennungsspektrum getrennt sind.

6. Prüfungsverfahren nach einem der vorhergehenden Ansprüche, **dadurch gekennzeichnet, dass** die Kontrollmarke (42) ein Kontrollspektralband absorbiert, das in dem Erkennungsspektralband (BSR) liegt und das nicht in dem Inspektionsspektralband (BSI) liegt oder das in dem einfallenden Erkennungslicht (LRi) liegt und das nicht in dem einfallenden Inspektionslicht (Lli) liegt.

7. Prüfungsverfahren nach einem der vorhergehenden Ansprüche, **dadurch gekennzeichnet, dass** der Erkennungsprozess den Kontrollbehälter (12t) als zu einer bestimmten Kategorie von Kontrollbehältern unter mehreren verschiedenen Kategorien von Kontrollbehältern gehörend identifiziert.

8. Prüfungsverfahren nach einem der vorhergehenden Ansprüche, **dadurch gekennzeichnet, dass** der Erkennungsprozess den Kontrollbehälter (12t) eindeutig identifiziert.

9. Prüfungsverfahren nach einem der vorhergehenden Ansprüche, **dadurch gekennzeichnet, dass** es den Schritt des Einfügens von mindestens einem Kontrollbehälter (12t) aufweist, der ein erwartetes Inspektionsergebnis in einer Reihe von zu inspizierenden Behältern (12) aufweist, und des Prüfens, ob das Inspektionsverfahren das erwartete Inspektionsergebnis für den Kontrollbehälter (12t) liefert.

10. Prüfungssystem einer Anlage zur optischen Inspektion (16a, 16b) von Glasbehältern, wobei die Anlage zur Inspektion (16a, 16b) eines Behälters aufweist:
- eine Quelle (24a, 24b) einfallenden Inspektionslichts (LIi), das einen Inspektionsbereich (18a, 18b) der Anlage beleuchtet und ein einfallendes Inspektionsspektrum aufweist,
- einen optischen Kollektor (26a, 26b), der zurückkommendes Inspektionslicht (LIr) erfasst, das aus der Wechselwirkung des einfallenden Inspektionslichts (LIi) mit einem inspizierten Abschnitt eines Behälters (12), der in dem Inspektionsbereich angeordnet ist, resultiert, wobei das zurückkommende Inspektionslicht ein zurückkommendes Inspektionsspektrum aufweist,
- einen photoelektrischen Inspektionssensor (28a, 28b), der das erfasste zurückkommende Inspektionslicht (LIr) in einem Inspektionsspektralband (BSI) in ein lineares oder zweidimensionales digitales Mehrpunkt-Inspektionsbild (II) umwandelt,
- eine Computereinheit (30) zum Analysieren des digitalen Inspektionsbildes, die dazu konfiguriert ist, ein Inspektionsergebnis des inspizierten Behälters zu bestimmen,
wobei das Prüfungssystem aufweist:
- mindestens einen Kontrollbehälter (12t), der eine Kontrollmarke (42) aufweist, die an einem Markierungsabschnitt (40) des Kontrollbehälters (12t) angebracht ist, wobei der Behälter geeignet ist, um in einem Inspektionsbereich der Anlage zur optischen Inspektion angeordnet zu werden, und
- eine Computerverarbeitungseinheit (30, 30a, 30b), die dazu konfiguriert ist, ein Inspektionsergebnis eines Kontrollbehälters (12t), wie durch die Anlage zur optischen Inspektion (16a, 16b) bestimmt, mit einem erwarteten Inspektionsergebnis des Kontrollbehälters (12t) zu vergleichen,
- eine Anlage zur optischen Erkennung (32) eines Kontrollbehälters (12t) durch optische Erkennung einer Kontrollmarke (42) in einem Markierungsabschnitt (40) des Kontrollbehälters (12t), umfassend:
∘ eine Quelle (34) einfallenden Erkennungslichts (LRi), das einen Erkennungsbereich (35) der Anlage beleuchtet und ein einfallendes Erkennungsspektrum aufweist,
∘ einen optischen Kollektor (36), der bei Anwesenheit eines Kontrollbehälters in dem Erkennungsbereich zurückkommendes Erkennungslicht (LRr) erfasst, das aus der Wechselwirkung des einfallenden Erkennungslichts (LRi) mit dem Markierungsabschnitt (40) und einer eventuellen Kontrollmarke (42) resultiert, wobei das zurückkommende Erkennungslicht (LRr) ein zurückkommendes Erkennungsspektrum aufweist,
wobei die Kontrollmarke (42), die an dem Markierungsabschnitt (40) eines Kontrollbehälters (12t) angebracht ist, optische Eigenschaften der Spektraltransformation aufweist, die dem markierten Markierungsabschnitt (44) optische Eigenschaften der Spektraltransformation verleihen, die von jenen des Markierungsabschnitts ohne Marke (46) in einem Nutzabschnitt des einfallenden Erkennungsspektrums und/oder des Erkennungsspektralbands verschieden sind,
**dadurch gekennzeichnet, dass** die Anlage ferner aufweist
∘ einen photoelektrischen Erkennungssensor (38), der das erfasste zurückkommende Erkennungslicht (LRr) in einem Erkennungsspektralband (BSR) in ein lineares oder zweidimensionales digitales Mehrpunkt-Erkennungssbild (IR) umwandelt,
∘ eine Computereinheit (30) zum Analysieren des digitalen Erkennungsbilds (IR), um die eventuelle Kontrollmarke (42) zu erkennen,
und dadurch, dass die Kontrollmarke (42), die an dem Markierungsabschnitt (40) eines Kontrollbehälters (12t) angebracht ist, optische Eigenschaften der Spektraltransformation aufweist, die dem markierten Markierungsabschnitt (44) optische Eigenschaften der Spektraltransformation verleihen, die mit jenen des Markierungsabschnitts ohne Marke (46) in mindestens der Gesamtheit eines Nutzabschnitts des einfallenden Inspektionsspektrums und des Erkennungsspektralbands (BSI) identisch sind,

11. Prüfungssystem nach Anspruch 10, **dadurch gekennzeichnet, dass** die Quelle des Erkennungslichts und die Quelle des Inspektionslichts (34, 24a, 24b) abwechselnd eingeschaltet werden.

12. Prüfungssystem nach einem der Ansprüche 10 oder 11, **dadurch gekennzeichnet, dass** die Kontrollmarke (42) ein photolumineszentes Material aufweist, das unter der Wirkung einer Beleuchtung in einem Anregungsspektralband ein Lumineszenzlicht emittiert, das ein Lumineszenzspektrum aufweist, und dadurch, dass das einfallende Erkennungsspektrum mindestens einen Teil des Anregungsspektralbands aufweist, während das einfallende Inspektionsspektrum von dem Anregungsspektralband getrennt ist.

13. Prüfungssystem nach einem der Ansprüche 10 bis 12, **dadurch gekennzeichnet, dass** die Kontrollmarke (42) ein photolumineszentes Material aufweist, das unter der Wirkung einer Beleuchtung in einem Anregungsspektralband ein Lumineszenzlicht emittiert, das ein Lumineszenzspektrum aufweist, und dadurch, dass das Lumineszenzspektrum in dem Erkennungsspektralband (BSR) liegt und von dem Inspektionsspektralband (BSI) getrennt ist.

14. Prüfungssystem nach einem der Ansprüche 10 bis 13, **dadurch gekennzeichnet, dass** das Inspektionsspektralband (BSI) und das Erkennungsspektralband (BSR) getrennt sind, und dadurch, dass das zurückkommende Inspektionsspektrum und das zurückkommende Erkennungsspektrum getrennt sind.

15. Prüfungssystem nach einem der Ansprüche 10 bis 14, **dadurch gekennzeichnet, dass** das einfallende Inspektionsspektrum und das einfallende Erkennungsspektrum getrennt sind.

16. Prüfungssystem nach einem der Ansprüche 10 bis 15, **dadurch gekennzeichnet, dass** die Kontrollmarke (42) ein Kontrollspektralband absorbiert, das in dem Erkennungsspektralband (BSR) liegt und das nicht in dem Inspektionsspektralband (BSI) liegt oder das in dem einfallenden Erkennungslicht (LRi) liegt und das nicht in dem einfallenden Inspektionslicht (LRr) liegt.

## Claims

1. A method of checking a procedure for the optical inspection of glass containers **(12),** wherein the optical inspection procedure of a container comprises the steps of:
- illuminating at least one inspected portion of the container with an incident inspection light **(LIi)** having an incident inspection spectrum;
- collecting a return inspection light **(LIrl, LIrl)** resulting from the interaction of the incident inspection light **(LIi)** with the inspected portion of the container, the return inspection light having a return inspection spectrum;
- converting, in an inspection spectral band **(BSI),** the collected return inspection light **(LIrl, LIrl)** into a linear or two-dimensional multipoint inspection digital image **(II);**
- analyzing the inspection digital image **(II)** for determining an inspection result from the inspected container **(12),**
wherein the method of checking comprises the steps of:
- inspecting, in accordance with the optical inspection procedure, a control container **(12t)** comprising a control mark **(42)** affixed to a marking portion of the control container **(40);**
- comparing an inspection result from the control container **(12t)** determined by the optical inspection procedure to a known inspection result from the control container **(12t);**
in which:
- the method of checking comprises a procedure for the optical recognition of a control container by optical reading of a control mark **(42)** in a marked marking portion **(44)** of the control container **(12t),** comprising the steps of:
∘ illuminating at least the marking portion **(40)** of the container with an incident recognition light **(LRi)** having an incident recognition spectrum;
∘ collecting a return recognition light **(LRr)** resulting from the interaction of the incident recognition light with the marking portion **(40)** and a possible control mark, the return recognition light **(LRr)** having a return recognition spectrum;
in which the control mark **(42),** affixed to the marking portion of a control container, has optical properties of spectral transformation such that:
- the transformation of the spectral intensity distribution between the incident recognition light **(LRi)** and the return recognition light **(LRr),** caused by interaction with the marked marking portion **(44),** is different, inside at least the recognition spectral band **(BSR),** from a transformation of the spectral intensity distribution between the incident recognition light and the return recognition light, caused by interaction with a marking portion free of any mark **(46);**
**characterized in that** the procedure of the method of checking further comprises
∘ converting, in a recognition spectral band **(BSR),** the collected return recognition light into a linear or two-dimensional multipoint recognition digital image (IR);
∘ analyzing the recognition digital image (IR) by computer for recognizing the possible control mark **(42)** therein;
and **in that** the control mark **(42),** affixed to the marking portion of a control container, has optical properties of spectral transformation such that:
- the transformation of the spectral intensity distribution between the incident inspection light **(LIi)** and the return inspection light **(LIr),** caused by interaction with the marked marking portion, is not different, inside at least one useful portion of the inspection spectral band **(BSI),** from the transformation of the spectral intensity distribution between the incident inspection light and the return inspection light by interaction with a marking portion free of any mark **(46).**

2. The method of checking according to claim 1, **characterized in that** the control mark **(42)** comprises a photoluminescent material which, under the effect of an illumination in an excitation spectral band, emits a luminescence light which exhibits a luminescence spectrum, and **in that** the incident recognition spectrum comprises at least one part of the excitation spectral band while the incident inspection spectrum is disjoint from the excitation spectral band.

3. The method of checking according to any one of the preceding claims, **characterized in that** the control mark **(42)** comprises a photoluminescent material which, under the effect of an illumination in an excitation spectral band, emits a luminescence light which exhibits a luminescence spectrum, and **in that** the luminescence spectrum is within the recognition spectral band **(BSR)** and disjoint from the inspection spectral band **(BSI).**

4. The method of checking according to any one of the preceding claims, **characterized in that** the spectral inspection band **(BSI)** and the recognition spectral band **(BSR)** are disjoint, and **in that** the return inspection spectrum and the return recognition spectrum are disjoint.

5. The method of checking according to any one of the preceding claims, **characterized in that** the incident inspection spectrum and the incident recognition spectrum are disjoint.

6. The method of checking according to one of the preceding claims, **characterized in that** the control mark **(42)** absorbs a control spectral band which is included in the recognition spectral band **(BSR)** and which is not included in the inspection spectral band **(BSI).**

7. The method of checking according to any one of the preceding claims, **characterized in that** the recognition procedure identifies the control container **(12t)** as belonging to a determined category of control containers from among a plurality of distinct categories of control containers.

8. The method of checking according to any one of the preceding claims, **characterized in that** the recognition procedure uniquely identifies the control container **(12t).**

9. The method of checking according to any one of the preceding claims, **characterized in that** it comprises the step of inserting at least one control container **(12t)** having an expected inspection result into a series of containers to be inspected **(12)** and checking that the inspection procedure determines the expected inspection result for said control container **(12t).**

10. A system of checking a facility for the optical inspection **(16a, 16b)** of glass containers, wherein the container inspection facility **(16a, 16b)** comprises:
- a source **(24a, 24b)** of incident inspection light **(LIi)** illuminating an inspection area **(18a, 18b)** of the facility and having an incident inspection spectrum;
- an optical collector **(26a, 26b)** collecting a return inspection light **(LIr)** resulting from the interaction of the incident inspection light **(LIi)** with an inspected portion of a container **(12)** placed in the inspection area, the return inspection light having a return inspection spectrum;
- an inspection photoelectric sensor **(28a, 28b)** converting, in an inspection spectral band **(BSI),** the collected return inspection light **(LIr)** into a linear or two-dimensional multipoint inspection digital image (**II**);
- a computer unit **(30)** for analyzing the inspection digital image configured for determining an inspection result from the inspected container, wherein the system of checking comprises:
- at least one control container **(12t)** comprising a control mark **(42)** affixed to a marking portion **(40)** of the control container **(12t),** the container being suitable for being positioned in the inspection area of the optical inspection facility, and;
- a computer processing unit **(30, 30a, 30b)** configured for comparing an inspection result from a control container **(12t),** as determined by the optical inspection facility **(16a, 16b),** to an expected inspection result from the control container **(12t);**
-- a facility for the optical recognition **(32)** of a control container **(12t)** by optical recognition of a control mark **(42)** in a marking portion **(40)** of the control container **(12t),** comprising:
∘ a source **(34)** of incident recognition light **(LRi)** illuminating a recognition area **(35)** of the facility and having an incident recognition spectrum;
∘ an optical collector **(36)** collecting, in the presence of a control container in the recognition area, a return recognition light **(LRr)** resulting from the interaction of the incident recognition light **(LRi)** with the marking portion **(40)** and with a possible control mark **(42),** the return recognition light **(LRr)** having a return recognition spectrum;
in that the control mark **(42),** affixed to the marking portion **(40)** of a control container **(12t),** has optical properties of spectral transformation which confer on the marked marking portion **(44)** optical properties of spectral transformation which differ from those of the marking portion free of any mark **(46)** in a useful portion of the incident recognition spectrum and/or of the recognition spectral band,
**characterized in that** the installation further comprises :
∘ a recognition photoelectric sensor **(38)** converting, in a recognition spectral band **(BSR),** the collected return recognition light **(LRr)** into a linear or two-dimensional multipoint recognition digital image;
∘ a computer unit **(30)** for analyzing the recognition digital image (IR) for detecting the possible control mark **(42);**
and **in that** the control mark **(42),** affixed to the marking portion **(40)** of a control container **(12t),** has optical properties of spectral transformation which confer on the marked marking portion **(44)** optical properties of spectral transformation which are identical to those of the marking portion free of any mark **(46)** in at least the whole of a useful portion of the incident inspection spectrum and of the inspection spectral band **(BSI).**

11. The system of checking according to claim **10, characterized in that** the recognition and inspection light sources **(34, 24a, 24b)** are switched on alternately.

12. The system of checking according to any one of claims **10** or **11, characterized in that** the control mark **(42)** comprises a photoluminescent material which, under the effect of an illumination in an excitation spectral band, emits a luminescence light which exhibits a luminescence spectrum, and **in that** the incident recognition spectrum comprises at least one part of the excitation spectral band while the incident inspection spectrum is disjoint from the excitation spectral band.

13. The system of checking according to any one of claims **10** to **12, characterized in that** the control mark **(42)** comprises a photoluminescent material which, under the effect of an illumination in an excitation spectral band, emits a luminescence light which exhibits a luminescence spectrum, and **in that** the luminescence spectrum is within the recognition spectral band **(BSR)** and disjoint from the inspection spectral band **(BSI).**

14. The system of checking according to any one of claims **10** to **13, characterized in that** the spectral inspection band **(BSI)** and the recognition spectral band **(BSR)** are disjoint or **in that** the return inspection spectrum and the return recognition spectrum are disjoint.

15. The system of checking according to any one of claims **10** to **14, characterized in that** the incident inspection spectrum and the incident recognition spectrum are disjoint.

16. The system of checking according to any one of claims **10** to **15, characterized in that** the control mark **(42)** absorbs a control spectral band which is included in the recognition spectral band **(BSR)** and which is not included in the inspection spectral band **(BSI),** or which is included in the incident recognition light **(LRi)** and which is not included in the incident inspection light **(LRr).**
